# EUROPEAN PATENT SPECIFICATION

(11) **EP 2 274 341 B1**
(45) Date of publication and mention of the grant of the patent: **15.02.2012**
(21) Application number: 09762804.4
(22) Date of filing: 21.04.2009
(51) Int. Cl.: C08F 10/00, C08F 4/659, B01D 5/00, B01J 37/00

(54) **METHODS FOR PREPARING CATALYST SYSTEMS**
VERFAHREN ZUR HERSTELLUNG VON KATALYSATORSYSTEMEN
PROCÉDÉS DE PRÉPARATION DE SYSTÈMES DE CATALYSEUR

(30) Priority: 28.04.2008 US 125722 P
(43) Date of publication of application: 19.01.2011
(73) Proprietor: Univation Technologies, LLC, Houston, TX 77056 (US)
(72) Inventor: AWE, Michael, D., Langhorne PA 19047 (US); MURUGANANDAM, Natarajan, Hillsborough NJ 08844 (US); CAO, Phuong, A., Old Bridge NJ 08857 (US)
(74) Representative: Hayes, Adrian Chetwynd
(86) International application number: PCT/US2009/002452
(87) International publication number: WO 2009/151507

(56) References cited:
- WO-A1-00/47635
- US-A- 4 864 072
- US-A1- 2005 256 280

## Description

### Cross Reference to Related Applications

This application claims the benefit of Serial No. 61/125,722, filed April 28, 2008, the disclosure of which is incorporated by reference in its entirety.

### Field of the Invention

Embodiments disclosed herein relate generally to methods for producing catalyst systems. In particular, embodiments disclosed herein relate generally to methods for producing catalyst systems comprising Group 15 atom and metal containing compounds and metallocene compounds.

### Background

Polymers produced with a multimodal molecular weight distribution offer unique product properties. Multimodal products, particularly bimodal products, can be produced by various methods, such as mixing different polymers, producing multimodal polymers under a series of reaction conditions, and reacting different catalysts under a single reactor condition. One method that has proven to be commercially viable, is the production of multimodal catalyst systems wherein a catalyst system comprises more than one catalyst or catalyst component, thus, in effect, providing more than one active site to polymerize monomers during the polymerization process. When fed to a reaction system, each catalyst component concurrently produces a polymer component with distinct product properties. The net result is a polymer composition with distinct product advantages.

U.S. Patent Nos. 6,605,675, 6,846,886, 6,956,089, 6,689,847, 6,274,684, 6,841,631, 6,894,128, 6,534,604, and PCT publications WO 2002/046243 and WO 2001/030861, generally, describe processes and techniques for making multimodal catalyst systems, and polymerizing with these multimodal catalyst systems. For example, these references discuss bimodal catalyst compositions comprising a combination of a Group 15 atom and metal containing compound (a bisamide compound) and a metallocene compound. One of the advantages of these multimodal catalyst systems lies in the molecular weight split (ratio of high to low molecular weight polymer produced). Other background references include WO 2005/068076, WO 2006/022918, and WO 2006/086104.

Accordingly, there exists a continuing need for developments in methods of producing these catalysts systems.

### SUMMARY

In one aspect, embodiments disclosed herein relate to a process as described in claim 1 to prepare a catalyst composition that includes combining catalyst precursors in a recycled organic reaction solvent; allowing the catalyst precursors to react to form a catalyst compound; and separating the formed catalyst compound from the reaction solvent.

In another aspect, embodiments disclosed herein relate to a process as described in claim 2 to reuse a solvent in the preparation of a catalyst composition that includes vaporizing a reaction solvent from a catalyst compound formed from catalyst precursors combined in the reaction solvent; collecting and condensing the vaporized reaction solvent; and recycling the reaction solvent to combine with additional catalyst precursors for formation of additional catalyst compound

Other aspects and advantages of the invention will be apparent from the following description and the appended claims

### BRIEF DESCRIPTION OF DRAWINGS

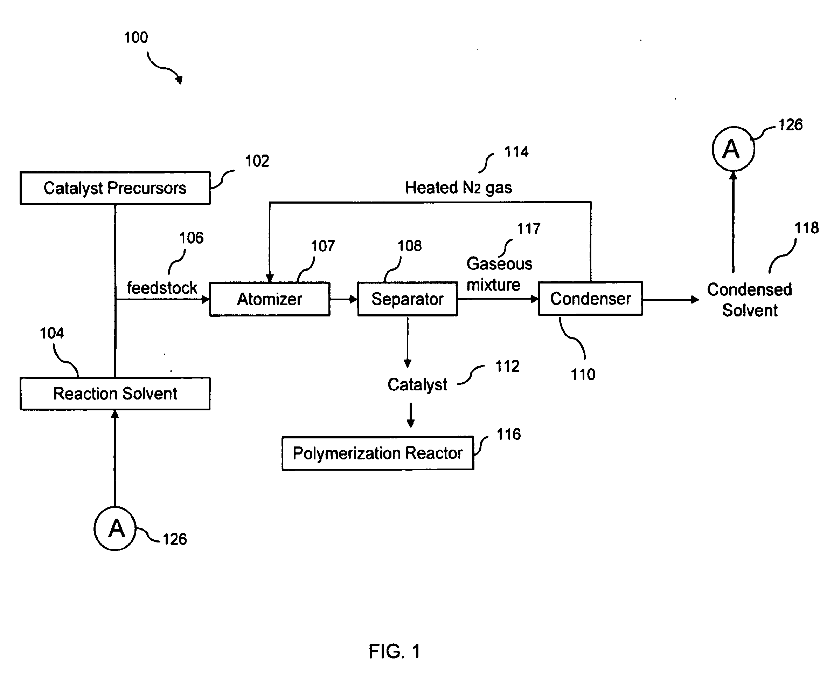

FIG. 1 is a simplified process flow diagram for use of a recycled reaction solvent, according to some embodiments disclosed herein

### DETAILED DESCRIPTION

Embodiments disclosed herein relate to methods of producing Group 15 atom and metal containing compounds, as well as multimodal catalyst systems containing Group 15 atom and metal containing compounds. In particular, embodiments disclosed herein relate to recycling and reuse of solvents in the manufacture of such catalysts.

### Preparation of Group 15 Atom and Metal Containing Compounds

Group 15 atom and metal containing compounds (discussed in greater detail below) utilized in the catalyst composition of the present disclosure may be generally prepared by methods known in the art, such as those disclosed in EP 0 893 454 A1, U.S. Patent No. 5,889,128 and the references cited in U.S. Patent No. 5,889,128 which are all herein incorporated by reference. However, in accordance with embodiments of the present disclosure, the Group 15 atom and metal containing compounds may be prepared by combining catalyst precursors in a recycled stream of a reaction solvent. Thus, upon formation of a catalyst compound from the reaction of the precursors in the reaction solvent, the formed catalyst compound may be subsequently separated from the reaction solvent, and the reaction solvent may be recycled for further use in preparation of additional catalyst compounds.

One exemplary direct synthesis of these compounds comprises reacting a neutral ligand (Group 15 containing compound), (see for example YZL or YZL' of formula I or II below) with MⁿXₙ (M is a Group 3 to 14 metal, n is the oxidation state of M, each X is an anionic group, such as halide), in a non-coordinating or weakly coordinating solvent, at about 20 to about 150°C (preferably 20 to 100°C), preferably for 24 hours or more, then treating the mixture with an excess (such as four or more equivalents) of an alkylating agent, such as methyl magnesium bromide in ether. The magnesium salts may be removed by filtration, and the metal complex isolated by standard techniques. In a preferred embodiment the solvent has a boiling point above 60°C, such as toluene, xylene, benzene, and/or hexane. In another embodiment the solvent comprises ether and/or methylene chloride, either being preferable. In addition to solvent being supplied simply as a solvent, one skilled in the art would appreciate various catalyst precursors may be supplied as a solution or slurry in a solvent, which may be the same (or different) as the reaction solvent.

Separation or isolation of the formed metal complex catalyst compound may be achieved using a variety of techniques known in the art. For example, as described in U.S. Patent No. 5,889,128, upon mixing and reaction of catalyst precursors, the mixture is filtered through Celite, and volatiles removed in vacuo. The residue is then dissolved and recrystallized from methylene chloride/pentane. The evaporated solvent may then be cooled, condensed, and recovered for reuse in formation of additional catalyst compound.

Alternatively, spray drying may be utilized. Spray drying may be achieved by any means known in the art. Please see EP A 0 668 295 B1, U.S. Patent No. 5,674,795 and U.S. Patent No. 5,672,669 and U.S. Patent Application Serial No. 09/464,114 filed December 16, 1999, which particularly describe spray drying of catalysts.

In a particular embodiment, upon mixing / reaction of catalyst precursors, a solution/suspension of the catalyst compound feedstock (including, for example metal compound components, an activator, a support, and reaction solvent) may be spray dried, in which a fine mist of the solution/suspension is rapidly dried by contact with hot nitrogen. Specifically, a heated nitrogen (or other gaseous stream) meets the catalyst feedstock at an atomizer, which produces a droplet stream on a continuous basis. Dried catalyst particles are trapped out of the process in a separator, such as a cyclone, which can separate solids formed from a gaseous mixture of nitrogen, reaction solvent, and other volatile components.

Thus, vaporized along with the reaction solvent may be volatile byproducts, catalyst fines, and/or catalyst decomposition fragments. The gaseous mixture may be sent to a condenser, where the reaction solvent, volatile aluminum (such as from the activator), other organic components and catalyst fines are condensed out of the gaseous nitrogen phase by contact with a countercurrent condensing column at low temperatures, e.g., about -5°C. The cold gaseous stream, essentially all nitrogen, may be reheated and cycled back to the atomizer for spray drying of additional catalyst. The liquids collected have conventionally been considered waste, requiring disposal of a large volume of material. However, with solvent recycle, a portion of this substantial amount of material is added to the feedstock preparation instead of fresh solvent.

Referring to FIG. 1, a process flow diagram for use / reuse of a recycled reaction solvent, according to embodiments disclosed herein, is shown. In process 100, catalyst precursors 102 are mixed with a reaction solvent 104, to form a catalyst feedstock 106. The mixture of the catalyst precursors 102 in the reaction solvent 104 results in formation of a catalyst 112 upon reaction between the catalyst precursors. Formed catalyst 112 is collected by spray drying with atomizer 107 by contacting droplets of feedstock 106 with hot nitrogen gas 114 Catalyst 112 may be trapped by separator 108 *(e.g.,* a cyclone) so that it may optionally be combined with any other components to form a catalyst composition (not shown) for use in polymerization reactor 116 to polymerize one or more olefins.

Also upon contact of hot nitrogen gas 114 with feedstock 106, solvent 104 (and any other volatiles) may be vaporized into the gaseous phase to form a gaseous mixture 117, from which the catalyst 112 is separated in cyclone 108. The solvent may be separated from the nitrogen gas (and nitrogen gas reheated for reuse in atomizer 107) by use of a condenser 110. Condensed solvent 118 may be may be recycled 126 for use in further catalyst preparation.

Additionally, while not shown, it is also within the scope of the present disclosure that some quantity of condensed solvent may be purged or removed from use in the system. Thus, without some quantity of solvent being removed from the system, as recycled solvent is added to the feedstock, the amount of aluminum and other organic components in the feedstock may change, with the amount of such components increasing with each subsequent recycle. Further, when catalyst precursors are supplied to the feedstock in a solvent material (*e.g*., MAO may be supplied in toluene), this volume of fresh solvent (and purge of a similar volume of solvent) may be sufficient to prevent or minimize a large buildup of materials such as aluminum or other organic components within the recycle stream.

For additional information of Group 15 containing metal compounds, please see Mitsui Chemicals, Inc. in EP 0 893 454 A1 which discloses transition metal amides combined with activators to polymerize olefins.

In one embodiment the Group 15 containing metal compound is allowed to age prior to use as a polymerization. It has been noted on at least one occasion that one such catalyst compound (aged at least 48 hours) performed better than a newly prepared catalyst compound.

In an exemplary embodiment, a sample catalyst composition may be prepared by mixing 13.7 g (0.035 mol) of (n-Propylcyclopentadienyl) (tetramethylcyclopentadienyl) Zirconium dichloride supplied by Boulder Scientific Company and 70.4 g (0.106 mol) of [(2,3,4,5,6-Me₅C₆)NCH₂CH₂]₂NHZrBz₂ or Bis(phenylmethyl)[N'-(2,3,4,5,6-pentamethylphenyl)-N-(2-[(2,3,4,5,6-pentamethylphenyl)amino-kN]ethyl]-1,2-ethanediaminato(2-)kN,kN']zirconium, supplied by Boulder Scientific Company with 11.6 kilograms (19.7 mol) of methylalumoxane (MAO) of a 10% solution by weight of MAO in toluene, 16.8 kilograms of toluene, and with 1.6 kilograms of treated fumed silica (Cabosil TS-610). The (n-Propylcyclopentadienyl) (tetramethylcyclopentadienyl) Zirconium dichloride, [(2,3,4,5,6-Me₅C₆)NCH₂CH₂]₂NHZrBz₂, MAO in toluene solution, and treated fumed silica may then be introduced into an atomizing device, thereby producing droplets that may be contacted with a nitrogen gas stream to evaporate the liquid, thereby forming a powder, which may be removed from the process in a cyclone. The resulting powder may then be mixed with HYDROBRITE™ 380 PO white mineral oil available from Sonneborn, and hexane to obtain a catalyst slurry. Prior to mixing, HYDROBRITE 380 oil may be purified by degassing with nitrogen for about 1 hour, followed by heating at 80°C, under vacuum for 10 hours). The gaseous mixture of nitrogen with evaporated toluene (and other volatile components and/or a small amount of fines) may be sent to a condenser, where the toluene (and other components) are condensed, collected, and recycled for reuse in catalyst preparation. Optionally, the condensed liquid may be subjected to one or separation techniques to substantially isolate the toluene from contaminants therein.

In another exemplary embodiment, another sample catalyst composition may be prepared by mixing 19.0 g (0.047 mol) of Bis(n-butylcyclopentadienyl) Zirconium dichloride, supplied by Boulder Scientific Company and 62.6 grams (0.094 mol) of [(2,3,4,5,6-Me₅C₆)NCH₂CH₂]₂NHZrBz₂ with 11.6 kilograms (19.7 mol of MAO) of a 10 % solution by weight of MAO in toluene, 16.8 kilograms of toluene, and with 1.6 kilograms of treated fumed silica (Cabosil TS-610). The Bis(n-butylcyclopentadienyl) Zirconium dichloride, [(2,3,4,5,6-Me₅C₆)NCH₂CH₂]₂NHZrBz₂, MAO in toluene solution, and treated fumed silica may then be introduced into an atomizing device, thereby producing droplets that may be contacted with a gas stream to evaporate the liquid, thereby forming a powder. The resulting powder may then be mixed with HYDROBRITE 380 PO white mineral oil available from Sonneborn and hexane to obtain a catalyst slurry. The evaporated toluene may be recovered, cooled, and condensed, and then subjected to one or more separation/purification steps to remove or reduce the number of contaminants present therein, and then be recycled for reuse in catalyst preparation.

The catalyst composition of the present disclosure may include one or more Group 15 atom and metal containing compounds. The Group 15 atom and metal containing compounds generally includes a Group 3 to 14 metal atom, preferably a Group 3 to 7, more preferably a Group 4 to 6, and even more preferably a Group 4 metal atom, bound to at least one leaving group and also bound to at least two Group 15 atoms, at least one of which is also bound to a Group 15 or 16 atom through another group.

In one embodiment, at least one of the Group 15 atoms is also bound to a Group 15 or 16 atom through another group which may be a C₁ to C₂₀ hydrocarbon group, a heteroatom containing group, silicon, germanium, tin, lead, or phosphorus, wherein the Group 15 or 16 atom may also be bound to nothing or a hydrogen, a Group 14 atom containing group, a halogen, or a heteroatom containing group, and wherein each of the two Group 15 atoms are also bound to a cyclic group and may optionally be bound to hydrogen, a halogen, a heteroatom or a hydrocarbyl group, or a heteroatom containing group.

In another embodiment, the-8-Group 15 atom and metal containing compound of the present disclosure may be represented by the formulae: 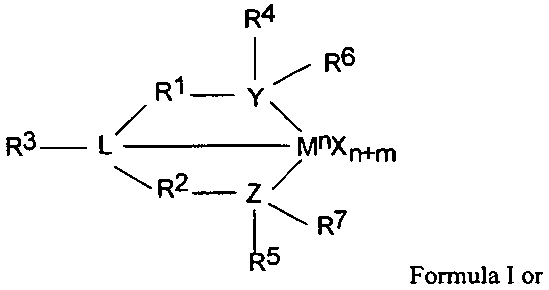 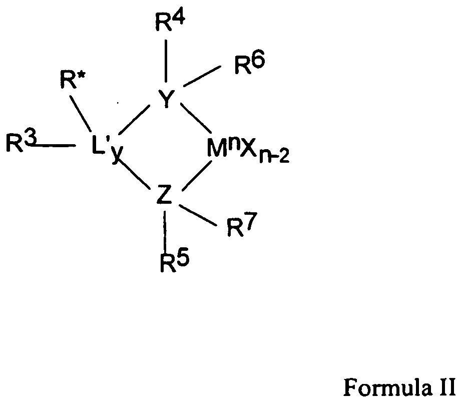 wherein
M is a Group 3 to 12 transition metal or a Group 13 or 14 main group metal, preferably a Group 4, 5, or 6 metal, and more preferably a Group 4 metal, and most preferably zirconium, titanium or hafnium, each X is independently a leaving group, preferably, an anionic leaving group, and more preferably hydrogen, a hydrocarbyl group, a heteroatom or a halogen, and most preferably an alkyl.
y is 0 or 1 (when y is 0 group L' is absent),
n is the oxidation state of M, preferably +3, +4, or +5, and more preferably +4,
m is the formal charge of the YZL or the YZL' ligand, preferably 0, -1, -2 or -3, and more preferably -2,
L is a Group 15 or 16 element, preferably nitrogen,
L' is a Group 15 or 16 element or Group 14 containing group, preferably carbon, silicon or germanium,
Y is a Group 15 element, preferably nitrogen or phosphorus, and more preferably nitrogen,
Z is a Group 15 element, preferably nitrogen or phosphorus, and more preferably nitrogen,
R¹ and R² are independently a C₁ to C₂₀ hydrocarbon group, a heteroatom containing group having up to twenty carbon atoms, silicon, germanium, tin, lead, or phosphorus, preferably a C₂ to C₂₀ alkyl, aryl or aralkyl group, more preferably a linear, branched or cyclic C₂ to C₂₀ alkyl group, most preferably a C₂ to C₆ hydrocarbon group. R¹ and R² may also be interconnected to each other.
R³ is absent or a hydrocarbon group, hydrogen, a halogen, a heteroatom containing group, preferably a linear, cyclic or branched alkyl group having 1 to 20 carbon atoms, more preferably R³ is absent, hydrogen or an alkyl group, and most preferably hydrogen
R⁴ and R⁵ are independently an alkyl group, an aryl group, substituted aryl group, a cyclic alkyl group, a substituted cyclic alkyl group, a cyclic aralkyl group, a substituted cyclic aralkyl group or multiple ring system, preferably having up to 20 carbon atoms, more preferably between 3 and 10 carbon atoms, and even more preferably a C₁ to C₂₀ hydrocarbon group, a C₁ to C₂₀ aryl group or a C₁ to C₂₀ aralkyl group, or a heteroatom containing group, for example PR₃, where R is an alkyl group,
R¹ and R² may be interconnected to each other, and/or R⁴ and R⁵ may be interconnected to each other,
R⁶ and R⁷ are independently absent, hydrogen, an alkyl group, halogen, heteroatom, or a hydrocarbyl group, preferably a linear, cyclic or branched alkyl group having 1 to 20 carbon atoms, and more preferably absent, and
R^{*} is absent, or is hydrogen, a Group 14 atom containing group, a halogen, or a heteroatom containing group.

By "formal charge of the YZL or YZL' ligand", it is meant the charge of the entire ligand absent the metal and the leaving groups X.

By "R¹ and R² may also be interconnected" it is meant that R¹ and R² may be directly bound to each other or may be bound to each other through other groups. By "R⁴ and R⁵ may also be interconnected" it is meant that R⁴ and R⁵ may be directly bound to each other or may be bound to each other through other groups.

An alkyl group may be linear, branched alkyl radicals, alkenyl radicals, alkynyl radicals, cycloalkyl radicals, aryl radicals, acyl radicals, aroyl radicals, alkoxy radicals, aryloxy radicals, alkylthio radicals, dialkylamino radicals, alkoxycarbonyl radicals, aryloxycarbonyl radicals, carbomoyl radicals, alkyl- or dialkyl- carbamoyl radicals, acyloxy radicals, acylamino radicals, aroylamino radicals, straight, branched or cyclic, alkylene radicals, or combination thereof. An aralkyl group is defined to be a substituted aryl group.

In a preferred embodiment R⁴ and R⁵ are independently a group represented by the following formula: 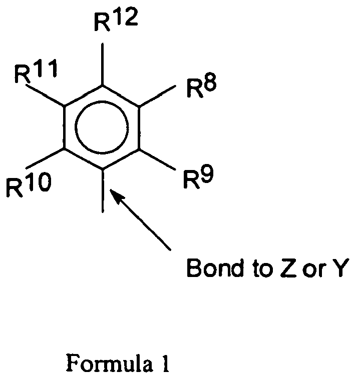 wherein
R⁸ to R¹² are each independently hydrogen, a C₁ to C₄₀ alkyl group, a halide, a heteroatom, a heteroatom containing group containing up to 40 carbon atoms, preferably a C₁ to C₂₀ linear or branched alkyl group, preferably a methyl, ethyl, propyl or butyl group, any two R groups may form a cyclic group and/or a heterocyclic group. The cyclic groups may be aromatic. In a preferred embodiment R⁹, R¹⁰ and R¹² are independently a methyl, ethyl, propyl or butyl group (including all isomers), in a preferred embodiment R⁹, R¹⁰ and R¹² are methyl groups, and R⁸ and R¹¹ are hydrogen.

In a particularly preferred embodiment R⁴ and R⁵ are both a group represented by the following formula:

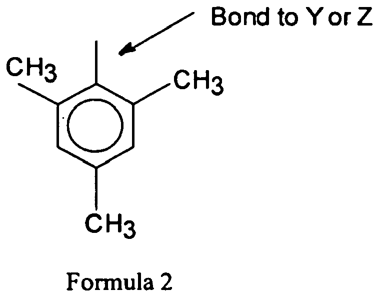

In this embodiment, M is a Group 4 metal, preferably zirconium, titanium or hafnium, and even more preferably zirconium; each of L, Y, and Z is nitrogen; each of R¹ and R² is -CH₂-CH₂-; R³ is hydrogen; and R⁶ and R⁷ are absent.

In a particularly preferred embodiment the Group 15 atom and metal containing compound is represented by Compound 1 below: 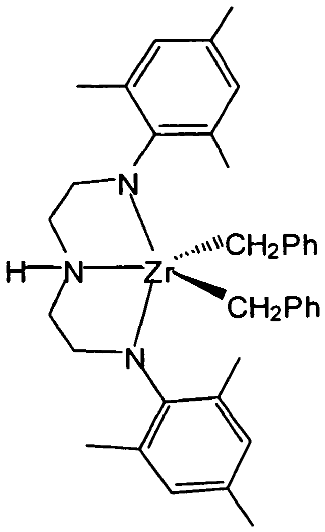 In compound 1, Ph equals phenyl.

### Catalyst Composition

The components of the formed catalyst composition of the present disclosure include catalyst compounds (including the Group 15 containing metal catalyst compounds described above), activator compounds and support materials. The formed catalyst components may be used in a slurry and/or in a solution for introduction into a polymerization reactor.

### Other Catalyst Compounds

Catalyst compounds which may be utilized, in addition to the Group 15 containing metal compounds described above, in the catalyst compositions of the present disclosure include: metallocene compounds; phenoxide catalyst compounds; additionally discovered catalyst compounds; and conventional-type transition metal catalysts.

### Metallocene Compounds

In addition to a Group 15 containing metal compound, the catalyst composition of the present disclosure may include one or more metallocene compounds. Generally, metallocene compounds include half and full sandwich compounds having one or more ligands bonded to at least one metal atom. Typical metallocene compounds are generally described as containing one or more ligand(s) and one or more leaving group(s) bonded to at least one metal atom.

The ligands are generally represented by one or more open, acyclic, or fused ring(s) or ring system(s) or a combination thereof. These ligands, preferably the ring(s) or ring system(s) are typically composed of atoms selected from Groups 13 to 16 atoms of the Periodic Table of Elements, preferably the atoms are selected from the group consisting of carbon, nitrogen, oxygen, silicon, sulfur, phosphorous, germanium, boron and aluminum or a combination thereof. Most preferably, the ring(s) or ring system(s) are composed of carbon atoms such as but not limited to those cyclopentadienyl ligands or cyclopentadienyl-type ligand structures or other similar functioning ligand structure such as a pentadiene, a cyclooctatetraendiyl or an imide ligand. The metal atom is preferably selected from Groups 3 through 15 and the lanthanide or actinide series of the Periodic Table of Elements. Preferably the metal is a transition metal from Groups 4 through 12, more preferably Groups 4, 5 and 6, and most preferably the transition metal is from Group 4.

In one embodiment, the catalyst composition of the present disclosure may include one or more metallocene catalyst compounds represented by the formula:

L^{A}L^{B}MQₙ (III)

where M is a metal atom from the Periodic Table of the Elements and may be a Group 3 to 12 metal or from the lanthanide or actinide series of the Periodic Table of Elements, preferably M is a Group 4, 5 or 6 transition metal, more preferably M is a Group 4 transition metal, even more preferably M is zirconium, hafnium or titanium. The ligands, L^{A} and L^{B}, are open, acyclic or fused ring(s) or ring system(s) and are any ancillary ligand system, including unsubstituted or substituted, cyclopentadienyl ligands or cyclopentadienyl-type ligands, heteroatom substituted and/or heteroatom containing cyclopentadienyl-type ligands. Non-limiting examples of bulky ligands include cyclopentadienyl ligands, cyclopentaphenanthreneyl ligands, indenyl ligands, benzindenyl ligands, fluorenyl ligands, octahydrofluorenyl ligands, cyclooctatetraendiyl ligands, cyclopentacyclododecene ligands, azenyl ligands, azulene ligands, pentalene ligands, phosphoyl ligands, phosphinimine (WO 99/40125), pyrrolyl ligands, pyrozolyl ligands, carbazolyl ligands, borabenzene ligands and the like, including hydrogenated versions thereof, for example tetrahydroindenyl ligands. In one embodiment, L^{A} and L^{B} may be any other ligand structure capable of n-bonding to M. In yet another embodiment, the atomic molecular weight (MW) of L^{A} or L^{B} exceeds 60 a.m.u., preferably greater than 65 a.m.u. In another embodiment, L^{A} and L^{B} may comprise one or more heteroatoms, for example, nitrogen, silicon, boron, germanium, sulfur and phosphorous, in combination with carbon atoms to form an open, acyclic, or preferably a fused, ring or ring system, for example, a hetero-cyclopentadienyl ancillary ligand. Other L^{A} and L^{B} ligands include but are not limited to bulky amides, phosphides, alkoxides, aryloxides, imides, carbolides, borollides, porphyrins, phthalocyanines, corrins and other polyazomacrocycles. Independently, each L^{A} and L^{B} may be the same or different type of ligand that is bonded to M. In one embodiment of Formula III only one of either L^{A} or L^{B} is present.

Independently, each L^{A} and L^{B} may be unsubstituted or substituted with a combination of substituent groups R. Non-limiting examples of substituent groups R include one or more from the group selected from hydrogen, or linear, branched alkyl radicals, or alkenyl radicals, alkynyl radicals, cycloalkyl radicals or aryl radicals, acyl radicals, aroyl radicals, alkoxy radicals, aryloxy radicals, alkylthio radicals, dialkylamino radicals, alkoxycarbonyl radicals, aryloxycarbonyl radicals, carbomoyl radicals, alkyl- or dialkyl- carbamoyl radicals, acyloxy radicals, acylamino radicals, aroylamino radicals, straight, branched or cyclic, alkylene radicals, or combination thereof. In a preferred embodiment, substituent groups R have up to 50 non-hydrogen atoms, preferably from 1 to 30 carbon, that can also be substituted with halogens or heteroatoms or the like. Non-limiting examples of alkyl substituents R include methyl, ethyl, propyl, butyl, pentyl, hexyl, cyclopentyl, cyclohexyl, benzyl or phenyl groups and the like, including all their isomers, for example tertiary butyl, isopropyl, and the like. Other hydrocarbyl radicals include fluoromethyl, fluoroethyl, difluoroethyl, iodopropyl, bromohexyl, chlorobenzyl and hydrocarbyl substituted organometalloid radicals including trimethylsilyl, trimethylgermyl, methyldiethylsilyl and the like; and halocarbyl-substituted organometalloid radicals including tris(trifluoromethyl)-silyl, methyl-bis(difluoromethyl)silyl, bromomethyldimethylgermyl and the like; and disubstitiuted boron radicals including dimethylboron for example; and disubstituted pnictogen radicals including dimethylamine, dimethylphosphine, diphenylamine, methylphenylphosphine, chalcogen radicals including methoxy, ethoxy, propoxy, phenoxy, methylsulfide and ethylsulfide. Non-hydrogen substituents R include the atoms carbon, silicon, boron, aluminum, nitrogen, phosphorous, oxygen, tin, sulfur, germanium and the like, including olefins such as but not limited to olefinically unsaturated substituents including vinyl-terminated ligands, for example but-3-enyl, prop-2-enyl, hex-5-enyl and the like. Also, at least two R groups, preferably two adjacent R groups, are joined to form a ring structure having from 3 to 30 atoms selected from carbon, nitrogen, oxygen, phosphorous, silicon, germanium, aluminum, boron or a combination thereof. Also, a substituent group R group such as 1-butanyl may form a carbon sigma bond to the metal M.

Other ligands may be bonded to the metal M, such as at least one leaving group Q. In one embodiment, Q is a monoanionic labile ligand having a sigma-bond to M. Depending on the oxidation state of the metal, the value for n is 0, 1 or 2 such that Formula III above represents a neutral metallocene catalyst compound.

Non-limiting examples of Q ligands include weak bases such as amines, phosphines, ethers, carboxylates, dienes, hydrocarbyl radicals having from 1 to 20 carbon atoms, hydrides or halogens and the like or a combination thereof. In another embodiment, two or more Q's form a part of a fused ring or ring system. Other examples of Q ligands include those substituents for R as described above and including cyclobutyl, cyclohexyl, heptyl, tolyl, trifluromethyl, tetramethylene, pentamethylene, methylidene, methyoxy, ethyoxy, propoxy, phenoxy, bis(N-methylanilide), dimethylamide, dimethylphosphide radicals and the like.

In another embodiment, the catalyst composition of the present disclosure may include one or more metallocene catalyst compounds where L^{A} and L^{B} of Formula III are bridged to each other by at least one bridging group, A, as represented by Formula IV.

L^{A}AL^{B}MQₙ (IV)

The compounds of Formula IV are known as bridged metallocene catalyst compounds. L^{A}, L^{B}, M, Q and n are as defined above. Non-limiting examples of bridging group A include bridging groups containing at least one Group 13 to 16 atom, often referred to as a divalent moiety such as but not limited to at least one of a carbon, oxygen, nitrogen, silicon, aluminum, boron, germanium and tin atom or a combination thereof. Preferably bridging group A contains a carbon, silicon or germanium atom, most preferably A contains at least one silicon atom or at least one carbon atom. The bridging group A may also contain substituent groups R as defined above including halogens and iron. Non-limiting examples of bridging group A may be represented by R'₂C, R'₂Si, R'₂Si R'₂Si, R'₂Ge, R'P, where R' is independently, a radical group which is hydride, hydrocarbyl, substituted hydrocarbyl, halocarbyl, substituted halocarbyl, hydrocarbyl-substituted organometalloid, halocarbyl-substituted organometalloid, disubstituted boron, disubstituted pnictogen, substituted chalcogen, or halogen or two or more R' may be joined to form a ring or ring system. In one embodiment, the bridged metallocene catalyst compounds of Formula IV have two or more bridging groups A (EP 664 301 B1).

In another embodiment, the metallocene catalyst compounds are those where the R substituents on the ligands L^{A} and L^{B} of Formulas III and IV are substituted with the same or different number of substituents on each of the ligands. In another embodiment, the ligands L^{A} and L^{B} of Formulas III and IV are different from each other.

Other metallocene catalyst compounds and catalyst systems useful in the present disclosure may include those described in U.S. Patent Nos. 5,064,802, 5,145,819, 5,149,819, 5,243,001, 5,239,022, 5,276,208, 5,296,434, 5,321,106, 5,329,031, 5,304,614, 5,677,401, 5,723,398, 5,753,578, 5,854,363, 5,856,547 5,858,903, 5,859,158, 5,900,517 and 5,939,503 and PCT publications WO 93/08221, WO 93/08199, W0 95/07140, WO 98/11144, WO 98/41530, WO 98/41529, WO 98/46650, WO 99/02540 and WO 99/14221 and European publications EP-A-0 578 838, EP-A-0 638 595, EP-B-0 513 380, EP-A1-0 816 372, EP-A2-0 839 834, EP-B1-0 632 819, EP-B1-0 748 821 and EP-B1-0 757 996, all of which are herein fully incorporated by reference.

In another embodiment, the catalyst compositions of the present disclosure may include bridged heteroatom metallocene compounds. These types of catalysts and catalyst systems are described in, for example, PCT publication WO 92/00333, WO 94/07928, WO 91/ 04257, WO 94/03506, WO96/00244, WO 97/15602 and WO 99/20637 and U.S. Patent Nos. 5,057,475, 5,096,867, 5,055,438, 5,198,401, 5,227,440 and 5,264,405 and European publication EP-A-0 420 436, all of which are herein fully incorporated by reference.

In another embodiment, the catalyst composition of the present disclosure includes one or more metallocene catalyst compounds represented by Formula V:

L^{c}AJMQₙ (V)

where M is a Group 3 to 16 metal atom or a metal selected from the Group of actinides and lanthanides of the Periodic Table of Elements, preferably M is a Group 4 to 12 transition metal, and more preferably M is a Group 4, 5 or 6 transition metal, and most preferably M is a Group 4 transition metal in any oxidation state, especially titanium; L^{C} is a substituted or unsubstituted ligand bonded to M; J is bonded to M; A is bonded to J and L^{C}; J is a heteroatom ancillary ligand; and A is a bridging group; Q is a univalent anionic ligand; and n is the integer 0,1 or 2. In Formula V above, L^{C}, A and J form a fused ring system. In an embodiment, L^{C} of Formula V is as defined above for L^{A}. A, M and Q of Formula V are as defined above in Formula III.

In Formula V J is a heteroatom containing ligand in which J is an element with a coordination number of three from Group 15 or an element with a coordination number of two from Group 16 of the Periodic Table of Elements. Preferably J contains a nitrogen, phosphorus, oxygen or sulfur atom with nitrogen being most preferred.

In an embodiment of the present disclosure, the metallocene catalyst compounds are heterocyclic ligand complexes where the ligands, the ring(s) or ring system(s), include one or more heteroatoms or a combination thereof. Non-limiting examples of heteroatoms include a Group 13 to 16 element, preferably nitrogen, boron, sulfur, oxygen, aluminum, silicon, phosphorous and tin. Examples of these metallocene catalyst compounds are described in WO 96/33202, WO 96/34021, WO 97/17379 and WO 98/22486 and EP-A1-0 874 005 and U.S. Patent No. 5,637,660, 5,539,124, 5,554,775, 5,756,611, 5,233,049, 5,744,417, and 5,856,258 all of which are herein incorporated by reference.

In one embodiment, the metallocene catalyst compounds are those complexes known as transition metal catalysts based on bidentate ligands containing pyridine or quinoline moieties, such as those described in U.S. Application Serial No. 09/103,620 filed June 23, 1998, which is herein incorporated by reference. In another embodiment, the metallocene catalyst compounds are those described in PCT publications WO 99/01481 and WO 98/42664, which are fully incorporated herein by reference.

In another embodiment, the metallocene catalyst compound is a complex of a metal, preferably a transition metal, a ligand, preferably a substituted or unsubstituted pi-bonded ligand, and one or more heteroallyl moieties, such as those described in U.S. Patent Nos. 5,527,752 and 5,747,406 and EP-B1-0 735 057, all of which are herein fully incorporated by reference.

In another embodiment, the catalyst composition of the present disclosure includes one or more metallocene catalyst compounds is represented by Formula VI:

L^{D}MQ₂(YZ)Xₙ (VI)

where M is a Group 3 to 16 metal, preferably a Group 4 to 12 transition metal, and most preferably a Group 4, 5 or 6 transition metal; L^{D} is a ligand that is bonded to M; each Q is independently bonded to M and Q₂(YZ) forms a ligand, preferably a unicharged polydentate ligand; or Q is a univalent anionic ligand also bonded to M; X is a univalent anionic group when n is 2 or X is a divalent anionic group when n is 1; n is 1 or 2.

In Formula VI, L and M are as defined above for Formula III. Q is as defined above for Formula III, preferably Q is selected from the group consisting of -O-, -NR-, -CR₂- and -S-; Y is either C or S; Z is selected from the group consisting of -OR, -NR₂, -CR₃, -SR, -SiR₃, -PR₂, -H, and substituted or unsubstituted aryl groups, with the proviso that when Q is -NR- then Z is selected from one of the group consisting of -OR, -NR₂, -SR, -SiR₃, -PR₂ and -H; R is selected from a group containing carbon, silicon, nitrogen, oxygen, and/or phosphorus, preferably where R is a hydrocarbon group containing from 1 to 20 carbon atoms, most preferably an alkyl, cycloalkyl, or an aryl group; n is an integer from 1 to 4, preferably 1 or 2; X is a univalent anionic group when n is 2 or X is a divalent anionic group when n is 1; preferably X is a carbamate, carboxylate, or other heteroallyl moiety described by the Q, Y and Z combination.

In another embodiment, the metallocene catalyst compounds are those described in PCT publications WO 99/01481 and WO 98/42664, which are fully incorporated herein by reference.

Useful Group 6 metallocene catalyst systems are described in U.S. Patent No. 5,942,462, which is incorporated herein by reference.

Still other useful catalysts include those multinuclear metallocene catalysts as described in WO 99/20665 and 6,010,794, and transition metal metaaracyle structures described in EP 0 969 101 A2, which are herein incorporated herein by reference. Other metallocene catalysts include those described in EP 0 950 667 A1, double cross-linked metallocene catalysts (EP 0 970 074 A1), tethered metallocenes (EP 970 963 A2) and those sulfonyl catalysts described in U.S. Patent No. 6,008,394, which are incorporated herein by reference.

It is also contemplated that in one embodiment the metallocene catalysts, described above, include their structural or optical or enantiomeric isomers (meso and racemic isomers, for example see U.S. Patent No. 5,852,143, incorporated herein by reference) and mixtures thereof.

It is further contemplated that any one of the metallocene catalyst compounds, described above, have at least one fluoride or fluorine containing leaving group as described in U.S. Application Serial No. 09/191,916 filed November 13, 1998.

### Phenoxide Catalyst Compound

The catalyst composition of the present disclosure may include one or more phenoxide catalyst compounds represented by the following formulae: 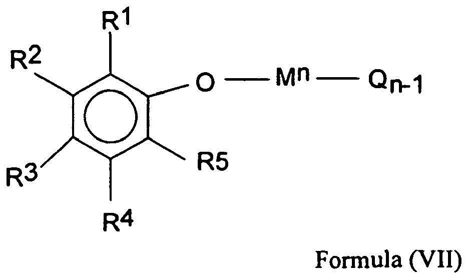 or 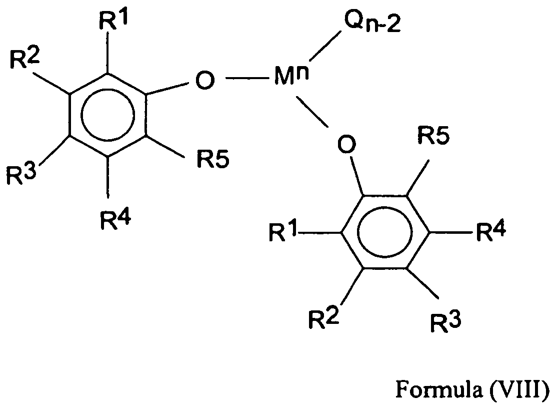 wherein R¹ is hydrogen or a C₄ to C₁₀₀ group, preferably a tertiary alkyl group, preferably a C₄ to C₂₀ alkyl group, preferably a C₄ to C₂₀ tertiary alkyl group, preferably a neutral C₄ to C₁₀₀ group and may or may not also be bound to M, and at least one of R² to R⁵ is a group containing a heteroatom, the rest of R² to R⁵ are independently hydrogen or a C₁ to C₁₀₀ group, preferably a C₄ to C₂₀ alkyl group (preferably butyl, isobutyl, pentyl hexyl, heptyl, isohexyl, octyl, isooctyl, decyl, nonyl, dodecyl) and any of R² to R⁵ also may or may not be bound to M,
O is oxygen, M is a group 3 to group 10 transition metal or lanthanide metal, preferably a group 4 metal, preferably Ti, Zr or Hf, n is the valence state of the metal M, preferably 2, 3, 4, or 5, Q is an alkyl, halogen, benzyl, amide, carboxylate, carbamate, thiolate, hydride or alkoxide group, or a bond to an R group containing a heteroatom which may be any of R¹ to R⁵ A heteroatom containing group may be any heteroatom or a heteroatom bound to carbon silica or another heteroatom. Preferred heteroatoms include boron, aluminum, silicon, nitrogen, phosphorus, arsenic, tin, lead, antimony, oxygen, selenium, tellurium. Particularly preferred heteroatoms include nitrogen, oxygen, phosphorus, and sulfur. Even more particularly preferred heteroatoms include oxygen and nitrogen. The heteroatom itself may be directly bound to the phenoxide ring or it may be bound to another atom or atoms that are bound to the phenoxide ring. The heteroatom containing group may contain one or more of the same or different heteroatoms. Preferred heteroatom groups include imines, amines, oxides, phosphines, ethers, ketenes, oxoazolines heterocyclics, oxazolines, thioethers, and the like. Particularly preferred heteroatom groups include imines. Any two adjacent R groups may form a ring structure, preferably a 5 or 6 membered ring. Likewise the R groups may form multi-ring structures. In one embodiment any two or more R groups do not form a 5 membered ring.

In a preferred embodiment, Q is a bond to any of R² to R⁵ and the R group that Q is bound to is a heteroatom containing group.

The present disclosure may also be practiced with the catalysts disclosed in EP 0 874 005 A1, which in incorporated by reference herein.

In a preferred embodiment the phenoxide catalyst compound comprises one or more of:
bis(*N*-methyl.3,5-di-*t*-butylsalicylimino)zirconium(IV) dibenzyl;
bis(*N*-ethyl-3,5-di-*t*-butylsalicylimino)zirconium(IV) dibenzyl;
bis(*N*-iso-propyl-3,5-di-*t*-butylsalicylimino)zirconium(IV) dibenzyl;
bis(*N*-*t*-butyl-3,5-di-*t*-butylsalicylimino)zirconium(IV) dibenzyl;
bis(*N*-benzyl-3,5-di-*t*-butylsalicylimino)zirconium(IV) dibenzyl;
bis(*N*-hexyl-3,5-di-*t*-butylsalicylimino)zirconium(IV) dibenzyl;
bis(*N*-phenyl-3,5-di-*t*-butylsalicylimino)zirconium(IV) dibenzyl;
bis(*N*-methyl-3,5-di-*t*-butylsalicylimino)zirconium(IV) dibenzyl;
bis(*N*-benzyl-3,5-di-*t*-butylsalicylimino)zirconium(IV) dichloride;
bis(*N*-benzyl-3,5-di-*t*-butylsalicylimino)zirconium(IV) dipivalate;
bis(*N*-benzyl-3,5-di-*t*-butylsalicylimino)titanium(IV) dipivalate;
bis(*N*-benzyl-3,5-di-*t*-butylsalicylimino)zirconium(IV) di(bis(dimethylamide));
bis(*N*-iso-propyl-3,5-di-*t*-amylsalicylimino)zirconium(IV) dibenzyl;
bis(*N*-iso-propyl-3,5-di-*t*-octylsalicylimino)zirconium(IV) dibenzyl;
bis(*N*-iso-propyl-3,5-di-(1',1'-dimethylbenzyl)salicylimino)zirconium(IV) dibenzyl;
bis(*N*-*iso-*propyl-3,5-di-(1',1'-dimethylbenzyl)salicylimino)titanium(IV) dibenzyl;
bis(*N*-*iso*-propyl-3,5-di-(1',1'-dimethylbenzyl)salicylimino)hafnium(IV) dibenzyl;
bis(*N*-*iso*-butyl-3,5-di-(1',1'-dimethylbenzyl)salicylimino)zirconium(IV) dibenzyl;
bis(*N*-*iso*-butyl-3,5-di-(1',1'-dimethylbenzyl)salicylimino)zirconium(IV) dichloride;
bis(*N*-hexyl-3,5-di-(1',1'-dimethylbenzyl)salicylimino)zirconium(IV) dibenzyl;
bis(*N*-phenyl-3,5-di-(1',1'-dimethylbenzyl)salicylimino)zirconium(IV) dibenzyl;
bis(*N*-iso-propyl-3,5-di-(1'-methylcyclohexyl)lsalicylimino)zirconium(IV) dibenzyl;
bis(*N*-benzyl-3-t-butylsalicylimino)zirconium(IV) dibenzyl;
bis(*N*-benzyl-3-triphenylmethylsalicylimino)zirconium(IV) dibenzyl;
bis(*N*-*iso*-propyl-3,5-di-trimethylsilylsalicylimino)zirconium(IV) dibenzyl;
bis(*N-iso*-propyl-3-(phenyl)salicylimino)zirconium(IV) dibenzyl;
bis(*N*-benzyl-3-(2',6'-di-*iso*-propylphenyl)salicylimino)zirconium(IV) dibenzyl;
bis(*N*-benzyl-3-(2',6'-di-phenylphenyl)salicylimino)zirconium(IV) dibenzyl;
bis(*N*-benzyl-3-*t*-butyl-5-methoxysalicylimino)zirconium(IV) dibenzyl;
bis(2-(2H-benzotriazol-2-yl)4,6-di-*t*-amylphenoxide)zirconium(IV) dibenzyl;
bis(2-(2H-benzotriazol-2-yl)-4,6-di-*t*-amylphenoxide)zirconium(IV) dichloride;
bis(2-(2H-benzotriazol-2-yl)4,6-di-*t*-amylphenoxide)zirconium(IV)
di(bis(dimethylamide)); bis(2-(2H-benzotriazol-2-yl)-4,6-di-(1',1'-dimethylbenzyl)phenoxide)zirconium(IV) dibenzyl;
bis(2-(2H-benzotriazol-2-yl)-4,6-di-*t*-amylphenoxide)titanium(IV) dibenzyl;
bis(2-(2H-benzotriazol-2-yl)-4,6-di-(1',1'-dimethylbenzyl)phenoxide)titanium(IV) dibenzyl;
bis(2-(2H-benzotriazol-2-yl)-4,6-di-(1',1'-dimethylbenzyl)phenoxide)titanium(IV) dichloride;
bis(2-(2H-benzotriazol-2-yl)-4,6-di-(1',1'-dimethylbenzyl)phenoxide)hafnium(IV) dibenzyl;
(*N*-phenyl-3,5-di-(1',1'-dimethylbenzyl)salicylimino)zirconium(IV) tribenzyl; (*N*-(2',6'-di-*iso*-propylphenyl)-3,5-di-(1',1'-dimethylbenzyl)salicylimino)zirconium(IV) tribenzyl;
(*N*-(2',6'-di-iso-propylphenyl)-3,5-di-(1',1'-dimethylbenzyl)salicylimino)titanium(IV) tribenzyl; and (*N*-(2',6'-di-*iso*propylphenyl)-3,5-di-(1',1'-dimethylbenzyl)salicylimino) zirconium(IV) trichloride.

### Additional Catalyst Compounds

The catalyst compositions of the present disclosure may include one or more complexes known as transition metal catalysts based on bidentate ligands containing pyridine or quinoline moieties, such as those described in U.S. Application Serial No. 09/103,620 filed June 23, 1998, which is herein incorporated by reference.

In one embodiment, these catalyst compounds are represented by the formula:

((Z)XAₜ(YJ))_{q}MQₙ (IX)

where M is a metal selected from Group 3 to 13 or lanthanide and actinide series of the Periodic Table of Elements; Q is bonded to M and each Q is a monovalent, bivalent, or trivalent anion; X and Y are bonded to M; one or more of X and Y are heteroatoms, preferably both X and Y are heteroatoms; Y is contained in a heterocyclic ring J, where J comprises from 2 to 50 non-hydrogen atoms, preferably 2 to 30 carbon atoms; Z is bonded to X, where Z comprises 1 to 50 non-hydrogen atoms, preferably 1 to 50 carbon atoms, preferably Z is a cyclic group containing 3 to 50 atoms, preferably 3 to 30 carbon atoms; t is 0 or 1; when t is 1, A is a bridging group joined to at least one of X,Y or J, preferably X and J; q is 1 or 2; n is an integer from 1 to 4 depending on the oxidation state of M. In one embodiment, where X is oxygen or sulfur then Z is optional. In another embodiment, where X is nitrogen or phosphorous then Z is present. In an embodiment, Z is preferably an aryl group, more preferably a substituted aryl group.

It is within the scope of the present disclosure, in one embodiment, the catalyst compounds include complexes of Ni²⁺ and Pd²⁺ described in the articles Johnson, et al., "New Pd(II)- and Ni(II)- Based Catalysts for Polymerization of Ethylene and a-Olefins", J. Am. Chem. Soc. 1995, 117, 6414-6415 and Johnson, et al., "Copolymerization of Ethylene and Propylene with Functionalized Vinyl Monomers by Palladium(II) Catalysts", J. Am. Chem. Soc., 1996, 118, 267-268, and WO 96/23010 published August 1, 1996, WO 99/02472, U.S. Patent Nos. 5,852,145, 5,866,663 and 5,880,241, which are all herein fully incorporated by reference. These complexes can be either dialkyl ether adducts, or alkylated reaction products of the described dihalide complexes that can be activated to a cationic state by the activators of the present disclosure described below.

Other catalyst compounds include those nickel complexes described in WO 99/50313, which is incorporated herein by reference.

Also included are those diimine based ligands of Group 8 to 10 metal catalyst compounds disclosed in PCT publications WO 96/23010 and WO 97/48735 and Gibson, et al., Chem. Comm., pp. 849-850 (1998), all of which are herein incorporated by reference.

Other useful catalyst compounds are those Group 5 and 6 metal imido complexes described in EP-A2-0 816 384 and U.S. Patent No. 5,851,945, which is incorporated herein by reference. In addition, metallocene catalysts include bridged bis(arylamido) Group 4 compounds described by D.H. McConville, et al., in Organometallics 1195, 14, 5478-5480, which is herein incorporated by reference. In addition, bridged bis(amido) catalyst compounds are described in WO 96/27439, which is herein incorporated by reference. Other useful catalysts are described as bis(hydroxy aromatic nitrogen ligands) in U.S. Patent No. 5,852,146, which is incorporated herein by reference. Other useful catalysts containing one or more Group 15 atoms include those described in WO 98/46651, which is herein incorporated herein by reference.

### Conventional Transition Metal Catalysts

In another embodiment, conventional-type transition metal catalysts may also be used in the practice of the present disclosure. Conventional-type transition metal catalysts are those traditional Ziegler-Natta, vanadium and Phillips-type catalysts well known in the art. Such as, for example Ziegler-Natta catalysts as described in Ziegler-Natta Catalysts and Polymerizations, John Boor, Academic Press, New York, 1979. Examples of conventional-type transition metal catalysts are also discussed in U.S. Patent Nos. 4,115,639, 4,077,904, 4,482,687, 4,564,605, 4,721,763, 4,879,359 and 4,960,741, all of which are herein fully incorporated by reference. The conventional-type transition metal catalyst compounds that may be used in the present disclosure include transition metal compounds from Groups 3 to 17, preferably 4 to 12, more preferably 4 to 6 of the Periodic Table of Elements.

Preferred conventional-type transition metal catalysts may be represented by the formula: MRₓ, where M is a metal from Groups 3 to 17, preferably Group 4 to 6, more preferably Group 4, most preferably titanium; R is a halogen or a hydrocarbyloxy group; and x is the oxidation state of the metal M. Non-limiting examples of R include alkoxy, phenoxy, bromide, chloride and fluoride. Non-limiting examples of conventional-type transition metal catalysts where M is titanium include TiCl₄, TiBr₄, Ti(OC₂H₅)₃Cl, Ti(OC₂H₅)Cl₃, Ti(OC₄H₉)₃Cl, Ti(OC₃H₇)₂Cl₂, Ti(OC₂H₅)₂Br₂, TiCl₃•1/3AlCl₃ and Ti(OC₁₂H₂₅)Cl₃.

Conventional-type transition metal catalyst compounds based on magnesium/titanium electron-donor complexes that are useful in the present disclosure are described in, for example, U.S. Patent Nos. 4,302,565 and 4,302,566, which are herein fully incorporate by reference. The MgTiCl₆ (ethyl acetate)₄ derivative is particularly preferred.

British Patent Application 2,105,355 and U.S. Patent No. 5,317,036, herein incorporated by reference, describes various conventional-type vanadium catalyst compounds. Non-limiting examples of conventional-type vanadium catalyst compounds include vanadyl trihalide, alkoxy halides and alkoxides such as VOCl₃, VOCl₂(OBu) where Bu =butyl and VO(OC₂H₅)₃; vanadium tetra-halide and vanadium alkoxy halides such as VCl₄ and VCl₃(OBu); vanadium and vanadyl acetyl acetonates and chloroacetyl acetonates such as V(AcAc)₃ and VOCl₂(AcAc) where (AcAc) is an acetyl acetonate. The preferred conventional-type vanadium catalyst compounds are VOCl₃, VCl₄ and VOCl₂-OR where R is a hydrocarbon radical, preferably a C₁ to C₁₀ aliphatic or aromatic hydrocarbon radical such as ethyl, phenyl, isopropyl, butyl, propyl, n-butyl, iso-butyl, tertiary-butyl, hexyl, cyclohexyl, naphthyl, etc., and vanadium acetyl acetonates.

Conventional-type chromium catalyst compounds, often referred to as Phillips-type catalysts, suitable for use in the present disclosure include CrO₃, chromocene, silyl chromate, chromyl chloride (CrO₂Cl₂), chromium-2-ethylhexanoate, chromium acetylacetonate (Cr(AcAc)₃), and the like. Non-limiting examples are disclosed in U.S. Patent Nos. 3,709,853, 3,709,954, 3,231,550, 3,242,099 and 4,077,904, which are herein fully incorporated by reference.

Still other conventional-type transition metal catalyst compounds and catalyst systems suitable for use in the present disclosure are disclosed in U.S. Patent Nos. 4,124,532, 4,302,565, 4,302,566, 4,376,062, 4,379,758, 5,066,737, 5,763,723, 5,849,655, 5,852,144, 5,854,164 and 5,869,585 and published EP-A2 0 416 815 A2 and EP-A1 0 420 436, which are all herein incorporated by reference.

Other catalysts may include cationic catalysts such as AlCl₃, and other cobalt, iron, nickel and palladium catalysts well known in the art. See for example U.S. Patent Nos. 3,487,112, 4,472,559, 4,182,814 and 4,689,437, all of which are incorporated herein by reference.

It is also contemplated that other catalysts can be combined with the catalyst compounds in the catalyst composition of the present disclosure. For example, see U.S. Patent Nos. 4,937,299, 4,935,474, 5,281,679, 5,359,015, 5,470,811, and 5,719,241 all of which are herein fully incorporated herein reference.

It is further contemplated that one or more of the catalyst compounds described above or catalyst systems may be used in combination with one or more conventional catalyst compounds or catalyst systems. Non-limiting examples of mixed catalysts and catalyst systems are described in U.S. Patent Nos. 4,159,965, 4,325,837, 4,701,432, 5,124,418, 5,077,255, 5,183,867, 5,391,660, 5,395,810, 5,691,264, 5,723,399 and 5,767,031 and PCT Publication WO 96/23010 published August 1, 1996, all of which are herein fully incorporated by reference.

### Activators and Activation Methods for Catalyst Compounds

The polymerization catalyst compounds, described above, are typically activated in various ways to yield compounds having a vacant coordination site that will coordinate, insert, and polymerize olefin(s). For the purposes of this patent specification and appended claims, the term "activator" is defined to be any compound which can activate any one of the catalyst compounds described above by converting the neutral catalyst compound to a catalytically active catalyst compound cation. Non-limiting activators, for example, include alumoxanes, aluminum alkyls, ionizing activators, which may be neutral or ionic, and conventional-type cocatalysts.

Further, as described above, one or more activators may be combined with the Group 15 atom and metal containing compound catalyst precursors during the preparation of the Group 15 atom and metal containing compound, as described herein.

### Aluminoxane and Aluminum Alkyl Activators

In one embodiment, alumoxanes activators are utilized as an activator in the catalyst composition of the present disclosure. Alumoxanes are generally oligomeric compounds containing -Al(R)-O- subunits, where R is an alkyl group. Examples of alumoxanes include methylalumoxane (MAO), modified methylalumoxane (MMAO), ethylalumoxane and isobutylalumoxane. Alumoxanes may be produced by the hydrolysis of the respective trialkylaluminum compound. MMAO may be produced by the hydrolysis of trimethylaluminum and a higher trialkylaluminum such as triisobutylaluminum. MMAO's are generally more soluble in aliphatic solvents and more stable during storage. There are a variety of methods for preparing alumoxane and modified alumoxanes, non-limiting examples of which are described in U.S. Patent No. 4,665,208, 4,952,540, 5,091,352, 5,206,199, 5,204,419, 4,874,734, 4,924,018, 4,908,463, 4,968,827, 5,308,815, 5,329,032, 5,248,801, 5,235,081, 5,157,137, 5,103,031, 5,391,793, 5,391,529, 5,693,838, 5,731,253, 5,731,451, 5,744,656, 5,847,177, 5,854,166, 5,856,256 and 5,939,346 and European publications EP-A-0 561 476, EP-B1-0 279 586, EP-A-0 594-218 and EP-B1-0 586 665, and PCT publications WO 94/10180 and WO 99/15534, all of which are herein fully incorporated by reference. Another alumoxane is a modified methyl alumoxane (MMAO) cocatalyst type 3A (commercially available from Akzo Chemicals, Inc. under the trade name Modified Methylalumoxane type 3A, covered under patent number US 5,041,584).

Aluminum Alkyl or organoaluminum compounds which may be utilized as activators include trimethylaluminum, triethylaluminum, triisobutylaluminum, tri-n-hexylaluminum, tri-n-octylaluminum and the like.

### Ionizing Activators

It is within the scope of this invention to use an ionizing or stoichiometric activator, neutral or ionic, such as tri (n-butyl) ammonium tetrakis (pentafluorophenyl) boron, a trisperfluorophenyl boron metalloid precursor or a trisperfluoronaphtyl boron metalloid precursor, polyhalogenated heteroborane anions (WO 98/43983), boric acid (U.S. Patent No. 5,942,459) or combination thereof. It is also within the scope of this invention to use neutral or ionic activators alone or in combination with alumoxane or modified alumoxane activators.

Examples of neutral stoichiometric activators include tri-substituted boron, tellurium, aluminum, gallium and indium or mixtures thereof. The three substituent groups are each independently selected from alkyls, alkenyls, halogen, substituted alkyls, aryls, arylhalides, alkoxy and halides. Preferably, the three groups are independently selected from halogen, mono or multicyclic (including halosubstituted) aryls, alkyls, and alkenyl compounds and mixtures thereof, preferred are alkenyl groups having 1 to 20 carbon atoms, alkyl groups having 1 to 20 carbon atoms, alkoxy groups having 1 to 20 carbon atoms and aryl groups having 3 to 20 carbon atoms (including substituted aryls). More preferably, the three groups are alkyls having 1 to 4 carbon groups, phenyl, napthyl or mixtures thereof. Even more preferably, the three groups are halogenated, preferably fluorinated, aryl groups. Most preferably, the neutral stoichiometric activator is trisperfluorophenyl boron or trisperfluoronapthyl boron.

Ionic stoichiometric activator compounds may contain an active proton, or some other cation associated with, but not coordinated to, or only loosely coordinated to, the remaining ion of the ionizing compound. Such compounds and the like are described in European publications EP-A-0 570 982, EP-A-0 520 732, EP-A-0 495 375, EP-B1-0 500 944, EP-A-0 277 003 and EP-A-0 277 004, and U.S. Patent Nos. 5,153,157, 5,198,401, 5,066,741, 5,206,197, 5,241,025, 5,384,299 and 5,502,124 and U.S. Patent Application Serial No. 08/285,380, filed August 3, 1994, all of which are herein fully incorporated by reference.

### Supports, Carriers and General Supporting Techniques

In particular embodiments, the catalyst composition of the present disclosure may include a support material or carrier, and preferably includes a supported activator. For example, the catalyst composition component, preferably the activator compound and/or the catalyst compound, is deposited on, contacted with, vaporized with, bonded to, or incorporated within, adsorbed or absorbed in, or on, a support or carrier.

Further, as described above, one or more support materials may be combined with the Group 15 atom and metal containing compound catalyst precursors during the preparation of the Group 15 atom and metal containing compound, as described herein.

### Support Material

The support material is any of the conventional support materials. Preferably the supported material is a porous support material, for example, talc, inorganic oxides and inorganic chlorides. Other support materials include resinous support materials such as polystyrene, functionalized or crosslinked organic supports, such as polystyrene divinyl benzene polyolefins or polymeric compounds, zeolites, clays, or any other organic or inorganic support material and the like, or mixtures thereof.

The preferred support materials are inorganic oxides that include those Group 2, 3, 4, 5, 13 or 14 metal oxides. The preferred supports include silica, which may or may not be dehydrated, fumed silica, alumina (WO 99/60033), silica-alumina and mixtures thereof. Other useful supports include magnesia, titania, zirconia, magnesium chloride (U.S. Patent No. 5,965,477), montmorillonite (European Patent EP-B1 0 511 665), phyllosilicate, zeolites, talc, clays (U.S. Patent No. 6,034,187) and the like. Also, combinations of these support materials may be used, for example, silica-chromium, silica-alumina, silica-titania and the like. Additional support materials may include those porous acrylic polymers described in EP 0 767 184 B1, which is incorporated herein by reference. Other support materials include nanocomposites as described in PCT WO 99/47598, aerogels as described in WO 99/48605, spherulites as described in U.S. Patent No. 5,972,510 and polymeric beads as described in WO 99/50311, which are all herein incorporated by reference.

It is preferred that the support material, most preferably an inorganic oxide, has a surface area in the range of from about 10 to about 700 m²/g, pore volume in the range of from about 0.1 to about 4.0 cc/g and average particle size in the range of from about 5 to about 500 µm. More preferably, the surface area of the support material is in the range of from about 50 to about 500 m²/g, pore volume of from about 0.5 to about 3.5 cc/g and average particle size of from about 10 to about 200 µm. Most preferably the surface area of the support material is in the range is from about 100 to about 400 m²/g, pore volume from about 0.8 to about 3.0 cc/g and average particle size is from about 5 to about 100 µm. The average pore size of the carrier of the present disclosure typically has pore size in the range of from 10 to 1000Å, preferably 50 to about 500Å, and most preferably 75 to about 350Å.

The support materials may be treated chemically, for example with a fluoride compound as described in WO 00/12565, which is herein incorporated by reference. Other supported activators are described in for example WO 00/13792 that refers to supported boron containing solid acid complex.

In a preferred embodiment, fumed silica available under the trade name CABOSIL™ TS-610, available from Cabot Corporation is utilized as a nucleating agent or as a viscosity builder in the catalyst component slurry discussed below. Fumed silica is typically a silica with particles 7 to 30 nanometers in size that has been treated with dimethylsilyldichloride such that a majority of the surface hydroxyl groups are capped. In another embodiment the fumed silica utilized has a particle size of less than 40microns, preferably less than 20 microns or preferably less than 10 microns.

In a preferred method of forming a supported catalyst composition component, the amount of liquid in which the activator is present is in an amount that is less than four times the pore volume of the support material, more preferably less than three times, even more preferably less than two times; preferred ranges being from 1.1 times to 3.5 times range and most preferably in the 1.2 to 3 times range. In an alternative embodiment, the amount of liquid in which the activator is present is from one to less than one times the pore volume of the support material utilized in forming the supported activator.

Procedures for measuring the total pore volume of a porous support are well known in the art. Details of one of these procedures is discussed in Volume 1, Experimental Methods in Catalytic Research (Academic Press, 1968) (specifically see pages 67-96). This preferred procedure involves the use of a classical BET apparatus for nitrogen absorption. Another method well known in the art is described in Innes, Total Porosity and Particle Density of Fluid Catalysts By Liquid Titration, Vol. 28, No. 3, Analytical Chemistry 332-334 (March, 1956).

### Spray Dried Catalyst Composition

In a particular embodiment, a support is combined with one or more activators and is spray dried to form a supported activator. In a preferred embodiment, fumed silica is combined with methyl alumoxane and then spray dried to from supported methyl alumoxane. Preferably a support is combined with alumoxane, spray dried and then placed in mineral oil to form a slurry useful in the instant disclosure.

In another embodiment, the catalyst compounds described above have been combined with optional support material(s) and or optional activator(s) and spray dried prior to being combined with the slurry diluent.

In another embodiment, the catalyst compounds (or precursors) and/or the activators are preferably combined with a support material such as a particulate filler material and then spray dried, preferably to form a free flowing powder. Spray drying may be by any means known in the art. Please see EP A 0 668 295 B1, U.S. Patent No. 5,674,795 and U.S. Patent No. 5,672,669 and U.S. Patent Application Serial No. 09/464,114 filed December 16, 1999, which particularly describe spray drying of supported catalysts. In general one may spray dry the catalysts by placing the catalyst compound and the optional activator in solution (allowing the catalyst compound and activator to react, if desired), adding a filler material such as silica or fumed silica, such as GASIL^{™} or CABOSIL™, then forcing the solution at high pressures through a nozzle. The solution may be sprayed onto a surface or sprayed such that the droplets dry in midair. The method generally employed is to disperse the silica in toluene, stir in the activator solution, and then stir in the catalyst compound solution. Typical slurry concentrations are about 5 to 8 wt%. This formulation may sit as a slurry for as long as 30 minutes with mild stirring or manual shaking to keep it as a suspension before spray-drying. In one preferred embodiment, the makeup of the dried material is about 40-50 wt% activator (preferably alumoxane), 50-60 SiO₂ and about 2 wt% catalyst compound.

In another embodiment, fumed silica such as such as GASIL^{™} or CABOSIL™ may be added to a solution containing a catalyst compound such that when that solution is added to the catalyst component slurry or injected into a polymerization reactor, the fumed silica acts as a template for "in situ spray" drying.

For simple catalyst compound mixtures, the two or more catalyst compounds can be added together in the desired ratio in the last step. In another embodiment, more complex procedures are possible, such as addition of a first catalyst compound to the activator/filler mixture for a specified reaction time t, followed by the addition of the second catalyst compound solution, mixed for another specified time x, after which the mixture is cosprayed. Lastly, another additive, such as 1-hexene in about 10 vol% can be present in the activator/filler mixture prior to the addition of the first metal catalyst compound.

In another embodiment binders are added to the mix. These can be added as a means of improving the particle morphology, i.e. narrowing the particle size distribution, lower porosity of the particles and allowing for a reduced quantity of alumoxane, which is acting as the 'blinder'.

In another embodiment a solution of a metallocene compound and optional activator can be combined with a different slurried spray dried catalyst compound and then introduced into a reactor.

The spray dried particles are generally fed into the polymerization reactor as a mineral oil slurry. Solids concentrations in oil are about 10 to 30 weight %, preferably 15 to 25 weight %. In some embodiments, the spray dried particles can be from less than about 10 micrometers in size up to about 100 micrometers, compared to conventional supported catalysts which are about 50 micrometers. In a preferred embodiment the support has an average particle size of 1 to 50 microns, preferably 10 to 40 microns.

To prepare the catalyst composition of the present disclosure, the catalyst components described above are utilized in a catalyst component slurry and/or in a catalyst component solution. For the purposes of the present disclosure, a slurry is defined to be a suspension of a solid, where the solid may or may not be porous, in a liquid. The catalyst components are combined to form the catalyst composition which is then introduced into a polymerization reactor. In particular embodiment, a catalyst component slurry and a catalyst component solution are combined to form the catalyst composition which is then introduced into a polymerization reactor.

### Catalyst Component Slurry

In one embodiment, the catalyst component slurry includes an activator and a support, or a supported activator. In another embodiment, the catalyst component slurry includes a fumed silica. In another embodiment, the slurry also includes a catalyst compound in addition to the activator and the support and/or the supported activator. In one embodiment, the catalyst compound in the slurry is supported.

In another embodiment, the slurry includes one or more activator(s) and support(s) and/or supported activator(s) and/or one more catalyst compound(s). For example, the slurry may include two or more activators (such as a supported alumoxane and a modified alumoxane) and a catalyst compound, or the slurry may include a supported activator and more than one catalyst compounds. Preferably, the slurry comprises a supported activator and two catalyst compounds.

In another embodiment the slurry comprises supported activator and two different catalyst compounds, which may be added to the slurry separately or in combination.

In another embodiment the slurry, containing a supported alumoxane, is contacted with a catalyst compound, allowed to react, and thereafter the slurry is contacted with another catalyst compound. In another embodiment the slurry containing a supported alumoxane is contacted with two catalyst compounds at the same time, and allowed to react.

In another embodiment the molar ratio of metal in the activator to metal in the catalyst compound in the slurry is 1000:1 to 0.5:1, preferably 300:1 to 1:1, more preferably 150:1 to 1:1.

In another embodiment the slurry contains a support material which may be any inert particulate carrier material known in the art, including, but not limited to, silica, fumed silica, alumina, clay, talc or other support materials such as disclosed above. In a preferred embodiment, the slurry contains a supported activator, such as those disclosed above, preferably methyl alumoxane and/or modified methyl alumoxane on a support of silica.

The catalyst component slurry used in the process of the present disclosure is typically prepared by suspending the catalyst components, preferably the support, the activator and optional catalyst compounds in a liquid diluent. The liquid diluent is typically an alkane having from 3 to 60 carbon atoms, preferably having from 5 to 20 carbon atoms, preferably a branched alkane, or an organic composition such as mineral oil or silicone oil. The diluent employed is preferably liquid under the conditions of polymerization and relatively inert. The concentration of the components in the slurry is controlled such that a desired ratio of catalyst compound(s) to activator, and/or catalyst compound to catalyst compound is fed into the reactor.

Typically, the catalyst compound and the support and activator, or supported activator, and the slurry diluent are allowed to contact each other for a time sufficient for at least 50% of the catalyst compounds to be deposited into or on the support, preferably at least 70%, preferably at least 75%, preferably at least 80%, more preferably at least 90%, preferably at least 95%, preferably at least 99%. In an embodiment, the catalyst component slurry is prepared prior to its use in the catalyst feed system of the present disclosure. Times allowed for mixing are up to 10 hours, typically up to 6 hours, more typically 4 to 6 hours. In one embodiment of the present disclosure a catalyst compound will be considered to be in or on the support if the concentration of the catalyst compound in the liquid portion of the slurry is reduced over time after adding the catalyst compound to the slurry. Concentration of the catalyst compound in the liquid diluent may be measured for example, by inductively coupled plasma spectroscopy (ICPS), or by ultraviolet (UV) spectroscopy, after standardization with a calibration curve prepared at the appropriate concentration range, as is known in the art. Thus for example, 70 % of a catalyst compound will be considered to have deposited in or on a support if the concentration of the catalyst compound in the liquid (not including the support) is reduced by 70% from its initial concentration.

In one embodiment, the catalyst compounds can be added to the slurry as a solution, slurry, or powder. The catalyst component slurry is prepared prior to its use in the polymerization process of the present disclosure or the catalyst component slurry may be prepared in-line.

In one embodiment, the slurry is prepared by combining the catalyst components, such as for example the catalyst or supported catalyst and the support and activator or supported activator, all at once. In another embodiment, the slurry is prepared by first adding a support material, then adding the combination of a catalyst and an activator component.

In another embodiment the slurry comprises a supported activator and at least one catalyst compound where the catalyst compound is combined with the slurry as a solution. A preferred solvent is mineral oil.

In a another embodiment, alumoxane, preferably methyl alumoxane or modified methyl alumoxane, is combined with a support such as calcined silica or fumed silica to form a supported activator, the supported activator is then dispersed in a liquid, such as degassed mineral oil, and then one or more catalyst compounds are added to the dispersion and mixed to form the catalyst component slurry. The catalyst compounds are preferably added to the dispersion as a solid, powder, solution or a slurry, preferably a slurry of mineral oil. If more than one catalyst compound is added to the dispersion, the catalyst compounds can be added sequentially, or at the same time.

In another embodiment the catalyst compound is added to the slurry in solid or powder form. In a preferred embodiment, a Group 15 containing catalyst compound is added to the slurry in powder or solid form. In another preferred embodiment, [(2,4,6-Me₃C₆H₂)NCH₂CH₂]₂NHZrBz₂ and or [(2,4,6-Me₃C₆H₂)NCH₂CH₂]₂NHHfBz₂ is added to the slurry as a powder.

In a preferred embodiment the catalyst component slurry comprises mineral oil and has a viscosity of about 130 to about 2000 cP at 20°C, more preferably about 180 to about 1500 cP at 20°C and even more preferably about 200 to about 800 cP at 20°C as measured with a Brookfield model LVDV-III Rheometer housed in a nitrogen purged drybox (in such a manner that the atmosphere is substantially free of moisture and oxygen, i.e. less than several ppmv of each). The catalyst component slurries are made in a nitrogen purged drybox, and rolled in their closed glass containers until immediately before the viscosity measurements are made, in order to ensure that they are fully suspended at the start of the trial. Temperature of the viscometer is controlled via an external temperature bath circulating heat transfer fluid into the viscometer. The rheometer was fitted with the appropriate spindle for the test material as specified in the unit's application guide. Typically, a SC4-34 or SC4-25 spindle was used. Data analysis was performed using Rheocalc V1.1 software, copyright 1995, Brookfield Engineering Laboratories, preferably purchased and used with the unit.

In one embodiment, the catalyst component slurry comprises a supported activator and one or more or a combination of the catalyst compound(s) described in Formula I to IX above.

In another embodiment, the catalyst component slurry comprises a supported activator and one or more or a combination of the Group 15 catalyst compound(s) represented by Formula I or II described above.

In another embodiment, the catalyst component slurry comprises a supported activator and one or more or combination of the metallocene catalyst compound(s) represented by Formula III to VI described above.

In another embodiment, the slurry comprises supported activator, a Group 15 catalyst compound(s) represented by Formula I or II described above, and a metallocene catalyst compound(s) represented by Formula III to VI.

In another embodiment, the slurry comprises supported alumoxane and [(2,4,6-Me₃C₆H₂)NCH₂CH₂]₂NH MBz₂ where M is a Group 4 metal, each Bz is a independently a benzyl group and Me is methyl.

In another embodiment, the slurry comprises a supported alumoxane, a Group 15 catalysts compound and one of the following: bis(n-propyl cyclopentadienyl)-MX₂, (pentamethylcyclopentadienyl)(n-propylcyclopentadienyl)MX₂, bis(indenyl)-MX₂, or (tetramethylcyclopentadienyl) (n-propyl cyclopentadienyl) MX₂, where M is zirconium, hafnium or titanium and X is chlorine, bromine, or fluorine.

In the polymerization process of the present disclosure, described below, any of the above described catalyst component containing slurries may be combined with any of the catalyst component containing solutions described below. In addition, more than one catalyst component containing slurry may be utilized.

### Catalyst Component Solution

In one embodiment, the catalyst component solution includes a catalyst compound. In another embodiment, the solution also includes an activator in addition to the catalyst compound.

The solution used in the process of the present disclosure is typically prepared by dissolving the catalyst compound and optional activators in a liquid solvent. The liquid solvent is typically an alkane, such as a C₅ to C₃₀ alkane, preferably a C₅ to C₁₀ alkane. Cyclic alkanes such as cyclohexane and aromatic compounds such as toluene may also be used. In addition, mineral oil may be used as a solvent. The solution employed should be liquid under the conditions of polymerization and relatively inert. In one embodiment, the liquid utilized in the catalyst compound solution is different from the diluent used in the catalyst component slurry. In another embodiment, the liquid utilized in the catalyst compound solution is the same as the diluent used in the catalyst component solution.

In a preferred embodiment the ratio of metal in the activator to metal in the catalyst compound in the solution is 1000:1 to 0.5 :1, preferably 300:1 to 1:1, more preferably 150:1 to 1:1.

In a preferred embodiment, the activator and catalyst compound is present in the solution at up to about 90 wt %, preferably at up to about 50 wt %, preferably at up to about 20 wt %, preferably at up to about 10 wt%, more preferably at up to about 5 wt%, more preferably at less than 1 wt%, more preferably between 100 ppm and 1 wt % based upon the weight of the solvent and the activator or catalyst compound.

In one embodiment, the catalyst component solution comprises any one of the catalyst compounds described in Formula I to IX above.

In another embodiment, the catalyst component solution comprises a Group 15 catalyst compound represented by Formula I or II described above.

In another embodiment, the catalyst component solution comprises a metallocene catalyst compound represented by Formula III to VI described above.

In a preferred embodiment the solution comprises bis(n-propyl cyclopentadienyl)-MX₂, (pentamethylcyclopentadienyl)(n-propylcyclopentadienyl)MX₂, bis(indenyl)-MX₂, (tetramethylcyclopentadienyl) (n-propylcyclopentadienyl) MX₂, where M is a Group 4 metal, preferably zirconium, hafnium or titanium and X is chlorine, bromine, or fluorine.

In the polymerization process of the present disclosure, described below, any of the above described catalyst component containing solution(s) may be combined with any of the catalyst component containing slurry/slurries described above. In addition, more than one catalyst component containing solution may be utilized.

The catalyst composition may be formed by combining catalyst compounds with other catalyst components described above. Such compositions may be formulated either as a slurry and/or a solution. The catalyst composition may be introduced into a polymerization reactor and combined with one or more olefins.

In a particular embodiment, the catalyst composition of the present disclosure may be formed by combining any one of the catalyst component slurries with any one of the catalyst component solutions described above. Generally, the catalyst component slurry and the catalyst component solution are mixed in the process of the present disclosure to form the final catalyst composition, which is then introduced into a polymerization reactor and combined with and one or more olefins. Preferably the catalyst component slurry and the catalyst component solution are continuously mixed and introduced into the polymerization reactor.

In one embodiment, the slurry contains at least one support and at least one activator, preferably a supported activator, and the solution contains at least one catalyst compound.

In another embodiment, the catalyst component slurry contains a support, and an activator and/or a supported activator, and the catalyst component solution contains at least one catalyst compound and at least one activator.

In one embodiment, the slurry contains at least one support and at least one activator, preferably a supported activator, and the solution contains one or more catalyst compound(s) and/or one or more activator compound(s).

In another embodiment, the catalyst component slurry contains more than one support(s), activator(s) and/or supported activator(s), and the catalyst component solution contains at least one catalyst compound.

In another embodiment, the catalyst component slurry contains more than one support(s), activator(s) and/or supported activator(s), and the catalyst component solution contains at least one catalyst compound and at least one activator.

In another embodiment, the catalyst component slurry contains more than one support(s), activator(s) and/or supported activator(s), and the catalyst component solution contains one or more catalyst compound(s) and/or one or more activator compound(s).

In another embodiment, the catalyst component slurry contains a support, an activator and/or a supported activator, and also contains a catalyst compound and/or a supported catalyst compound, and the catalyst component solution contains at least one catalyst compound.

In another embodiment, the catalyst component slurry contains a support, an activator and/or a supported activator, and also contains a catalyst compound and/or a supported catalyst compound, and the catalyst component solution contains at least one catalyst compound and at least one activator.

In another embodiment, the catalyst component slurry contains a support, an activator and/or a supported activator, and also contains a catalyst compound and/or a supported catalyst compound, and the catalyst component solution contains one or more catalyst compound(s) and/or one or more activator compound(s).

In another embodiment, the catalyst component slurry contains a support, an activator and/or a supported activator and more than one catalyst compound(s) and/or supported catalyst compounds, and the catalyst component solution contains at least one catalyst compound.

In another embodiment, the catalyst component slurry contains a support, an activator and/or a supported activator and more than one catalyst compound(s) and/or supported catalyst compounds, and the catalyst component solution contains at least one catalyst compound and at least one activator.

In another embodiment, the catalyst component slurry contains a support, an activator and/or a supported activator and more than one catalyst compound(s) and/or supported catalyst compounds, and the catalyst component solution contains one or more catalyst compound(s) and/or one or more activator compound(s).

In another embodiment, the catalyst component slurry contains more than one support(s), activator(s) and/or supported activators and more than one catalyst compound(s) and/or supported catalyst compound(s), and the catalyst component solution contains at least one catalyst compound.

In another embodiment, the catalyst component slurry contains more than one support(s), activator(s) and/or supported activators and more than one catalyst compound(s) and/or supported catalyst compound(s), and the catalyst component solution contains at least one catalyst compound and at least one activator.

In another embodiment, the catalyst component slurry contains more than one support(s), activator(s) and/or supported activators and more than one catalyst compound(s) and/or supported catalyst compound(s), and the catalyst component solution contains one or more catalyst compound(s) and/or one or more activator compound(s).

In one embodiment the catalyst composition, formed by combining the catalyst component slurry and the catalyst component solution, has a viscosity of about 130 to about 2000 cP at 20°C, more preferably about 180 to about 1500 cP at 20°C even more preferably about 200 to about 800 cP at 20°C.

In another embodiment, the catalyst component solution comprises, up to 80 weight %, preferably up to 50 weight %, preferably up to 20 weight %, preferably up to 15 weight %, more preferably between 1 to 10 weight %, more preferably 3 to 8 weight % of the combination of the catalyst component solution and the catalyst component slurry, based upon the weight of the solution and the slurry. In another preferred embodiment, the catalyst component solution comprises mineral oil and comprises up to 90 weight %, preferably up to 80 weight %, more preferably between 1 to 50 weight %, and more preferably 1 to 20 weight % of the combination of the catalyst component solution and the catalyst component slurry, based upon the weight of the solution and the slurry.

In one embodiment, the catalyst component slurry is fed to the polymerization reactor utilizing a slurry feeder. In another embodiment the catalyst composition, which includes the catalyst component slurry and the catalyst component solution, is fed to the polymerization reactor utilizing a slurry feeder. A slurry feeder, for example, is described U.S. Patent 5,674,795, incorporated herein by reference.

In one embodiment, the catalyst component solution, comprising a catalyst compound, is contacted with the catalyst component slurry so that at least 50% of the catalyst compound originally in the catalyst component solution is deposited in or on the support, preferably at least 70%, preferably at least 75%, preferably at least 80%, more preferably at least 90%, preferably at least 95%, preferably at least 99%.

In another embodiment, the catalyst component solution comprising a metallocene catalyst compound, is contacted with a catalyst component slurry comprising a support and an activator, preferably a supported activator, to form an immobilized catalyst composition. After contacting, all or substantially all, preferably at least 50% preferably at least 70%, preferably at least 75%, preferably at least 80%, more preferably at least 90%, preferably at least 95%, preferably at least 99% of the catalyst compound from the catalyst component solution is deposited in or on the support initially contained in the catalyst component slurry. In one embodiment, a catalyst compound will be considered to be in or on the support if the concentration of the catalyst compound in the liquid portion of the combination is reduced over time after adding the catalyst compound from the solution. The catalyst concentration may be measured as described above.

In another embodiment, the supported activator is in a mineral oil that is then contacted with a metallocene catalyst solution prior to introducing the catalyst composition to the reactor, preferably where the contacting takes place in-line.

In another embodiment, the immobilized catalyst composition system or components thereof may be contacted with a carboxylate metal salt as described in PCT publication WO 00/02930 and WO 00/02931, which are herein incorporated by reference.

In another embodiment the solution comprises a catalyst compound and the slurry comprises a supported activator, such as supported alumoxane, and two or more catalyst compounds, that may be the same or different from the catalyst compound in the solution. The two catalyst compounds may be added to the slurry before or after the supported activator. In a preferred embodiment the supported activator is added to the liquid diluent first to form a slurry, then a catalyst compound is added to the slurry, and thereafter another catalyst compound is added to the slurry. The second catalyst is preferably added after the first catalyst compound and the supported activator have been contacted for at least 1 minute, preferably at least 15 minutes, more preferably at least 30 minutes, more preferably at least 60 minutes, more preferably at least 120 minutes, more preferably at least 360 minutes.

In another embodiment the two catalyst compounds are added to the slurry at the same time, in the same or different solutions. In another embodiment, a catalyst compound is contacted with an unsupported activator prior to being placed in the slurry. In a preferred embodiment, the unsupported activator is a modified or unmodified alumoxane, such as methyl alumoxane.

In another embodiment, the catalyst compound may be added to the solution or slurry in its constituent parts of metal compound and ligands. For example, cyclopentadienyl groups such as substituted or unsubstituted cyclopentadiene, indene, fluorene groups and metal compounds such as zirconium tetrahalide may be added to the slurry or solution or both and allowed to react therein. Likewise, one may also add metal compounds and or ligands to the solution and or slurry that already contains catalyst compounds. The metal compounds and ligands may be the same or different from the components of the catalyst compound in the solution or slurry. In another embodiment ligands and/or metal compounds may be added to both the solution and the slurry.

In another embodiment the catalyst composition comprises a "bisamide" catalyst compound (i.e., a bridged bis(arylamido) Group 4 compounds described by D.H. McConville, et al., in Organometallics 1195, 14, 5478-5480, or a bridged bis(amido) catalyst compounds described in WO 96/27439) combined with an activator, spray dried to a powder state, then combined with mineral oil to form a slurry. This combination may then be combined with various catalyst component solutions to form a particularly effective multiple catalyst systems. Preferred catalyst compounds include those described above as metallocene catalysts. In another preferred embodiment the slurry comprises a supported activator and the solution comprises a catalyst compound. The catalyst compounds may be selected from various catalyst compounds described above including metallocenes.

In another embodiment, the slurry comprises [(2,4,6-Me₃C₆H₂) NCH₂CH₂]₂NHZrBz₂ or [(2,4,6-Me₃C₆H₂)NCH₂CH₂]₂NHHfBz₂, where each Bz is independently a benzyl group, Me is methyl, and the solution comprises bis(n-propyl cyclopentadienyl)-MX₂, (pentamethylcyclopentadienyl)(n-propylcyclopentadienyl)MX₂, bis(indenyl)-MX₂, or (tetramethylcyclopentadienyl) (n-propylcyclopentadienyl) MX₂, where M is zirconium, hafnium or titanium and X is chlorine, bromine, or fluorine.

In another embodiment, the solution comprises [(2,4,6Me₃C₆H₂) NCH₂CH₂]₂NHZrBz₂ or [(2,4,6-Me₃C₆H₂)NCH₂CH₂]₂NHHfBz₂, where each Bz is independently a benzyl group, Me is methyl, and the slurry comprises: 1) supported alumoxane, and 2) bis(n-propyl cyclopentadienyl)-MX₂, pentamethylcyclopentadienyl)(n-propylcyclopentadienyl)MX₂, bis(indenyl)-MX₂, or (tetramethylcyclopentadienyl) (n-propylcyclopentadienyl) MX₂, where M is zirconium, hafnium or titanium and X is chlorine, bromine, or fluorine.

In another embodiment, the slurry comprises: 1) a supported alumoxane, 2) bis(n-propyl cyclopentadienyl)-MX₂, (pentamethylcyclopentadienyl)(n-propyl- cyclopentadienyl)MX₂, bis(indenyly MX₂, (tetramethylcyclopentadienyl) (n-propylcyclopentadienyl) MX₂, where M is zirconium, hafnium or titanium and X is chlorine, bromine, or fluorine, and 3) [(2,4,6-Me₃C₆H₂)NCH₂CH₂]₂NHZrBz₂ or [(2,4,6-Me₃C₆H₂)NCH₂CH₂]₂NHHfBz₂, and the solution comprises a metallocene compound.

In another embodiment, the slurry comprises mineral oil and a spray dried catalyst compound. In another embodiment, the spray dried catalyst compound is a Group 15 containing metal compound. In a preferred embodiment, the spray dried catalyst compound comprises [(2,4,6-Me₃C₆H₂)NCH₂CH₂]₂NHZrBz₂ or its hafnium analog.

In another embodiment, the catalyst compound and the supported activator may be combined before being combined with the slurry diluent or after.

In another embodiment the solution comprises a catalyst compound of bis-indenyl zirconium dichloride, bis(n-propyl cyclopentadienyl) zirconium dichloride, (pentamethylcyclopentadienyl)(n-propylcyclopentadienyl)zirconium dichloride, (tetramethylcyclopentadienyl)(n-propylcyclopentadienyl)zirconium dichloride, or a mixture thereof.

In another embodiment, a first catalyst compound is combined with a supported activator in the slurry, and a second catalyst compound and an activator are combined in the solution and thereafter the two are mixed in line. In another embodiment, the one activator is an alumoxane and the other activator is a boron based activator.

In another embodiment the slurry comprises mineral oil, spray dried [(2,4,6-Me₃C₆H₂)NCH₂CH₂]₂NHZrBz₂, and the solution comprises bis(n-propyl cyclopentadienyl) zirconium dichloride.

In a one embodiment of the present disclosure the slurry comprises supported activator and a catalyst compound and the solution comprises a catalyst compound different in some way from the catalyst compound in the slurry. For example, the slurry catalyst compound could be a compound represented by the Formula I or II described above, while the solution catalyst compound could be a catalyst compound described by Formula III, IV, V, VI, or VII, or vice versa.

In another embodiment, if a bimodal polymer product were desired, one could mix a first catalyst compound with an activator in the slurry, then on-line add a solution of a different catalyst compound that is capable of being activated by the same activator. Since the two catalyst compounds are introduced into the feed line independently, it will be easier to control the amount of the two species in the final bimodal product, assuming that each catalyst produces at least one species of polymer.

In another embodiment, a Group 15 metal containing compound and a metallocene catalyst compound are combined with supported alumoxane in the process of the present disclosure. Typically the two catalyst compounds are combined in the slurry with the supported alumoxane and the solution will comprise a trim solution of one or the other of the two catalyst compounds.

In another embodiment, [(2,4,6-Me₃C₆H₂)NCH₂CH₂]₂NHHfBz₂, and bis(n-propyl cyclopentadienyl) zirconium dichloride are combined with supported methyl alumoxane in the process of the present disclosure. Typically the two catalyst compounds are combined in the slurry with the supported alumoxane and the solution will comprise one or the other of the two catalyst compounds. The solution is preferably used as a trim solution to regulate the product formed in the reactor by varying the amount of solution combined with the slurry on-line, i.e. to trim the mix. In one embodiment this catalyst combination is then used to polymerize olefin(s), preferably ethylene, at a polymerization temperature of 80 to 110°C and in the presence of little or no comonomer(s) for example hexene.

In another embodiment the slurry concentration is maintained at greater than 0 to 90 wt % solids, more preferably 1 to 50 wt %, more preferably 5 to 40 wt %, even more preferably 10 to 30 wt %, based upon the weight of the slurry. In another preferred embodiment the activator is present on the support at between about 0.5 to about 7 mmol/g, preferably about 2 to about 6 mmol/g, more preferably between about 4 to about 5 mmol/g. In another preferred embodiment the total amount of catalyst compound present on the support, preferably a supported activator, is about 1 to about 40 µmol/g, preferably about 10 to about 38 µmol/g, more preferably 30 to 36 µmol/g.

In one embodiment the final mole ratio (i.e. after combination of the solution and the slurry) of the metal of the catalyst compounds and the metal of the activator is in the range of from about 1000:1 1 to about 0.5:1 preferably from about 300:1 to about 1:1 more preferably from about 150:1 to about 1:1; for boranes, borates, aluminates, etc., the ratio is preferably about 1:1 to about 10:1 and for alkyl aluminum compounds (such as diethylaluminum chloride combined with water) the ratio is preferably about 0.5:1 to about 10:1.

In one embodiment, the catalyst compound used in the slurry is not soluble in the solvent used in the solution. By "not soluble" is meant that the not more than 5 weight % of the material dissolves into the solvent at 20 °C and less than 3 minutes of stirring, preferably not more than 1 weight %, preferably not more than 0.1 weight %, preferably not more than 0.01 weight%. In a preferred embodiment, the catalyst compound used in the slurry at least only sparingly soluble in an aromatic hydrocarbon. In a particularly preferred embodiment the catalyst compound used in the slurry is not soluble in mineral oil, aromatic solvent or aliphatic hydrocarbon (pentane, heptane, etc.).

### Delivery of the Catalyst Composition

In the process of the present disclosure, the catalyst component slurry is combined with and/or reacted with the catalyst component solution to form a catalyst composition in-line. The catalyst composition so formed is then is introduced into the polymerization reactor. Generally the catalyst composition is introduced to the reactor utilizing a catalyst feed system which includes a catalyst component slurry holding vessel, a catalyst component solution holding vessel, and a slurry feeder.

Referring to Figure 1, in one embodiment, the catalyst component slurry, preferably a mineral oil slurry including at least one support and at least one activator, preferably at least one supported activator, and optional catalyst compound(s) is placed in a vessel (A). In a preferred embodiment (A) is an agitated holding tank designed to keep the solids concentration homogenous. The catalyst component solution, prepared by mixing a solvent and at least one catalyst compound and/or activator, is placed in a vessel (C). The catalyst component slurry is then combined in-line with the catalyst component solution to form a final catalyst composition. A nucleating agent, such as silica, alumina, fumed silica or any other particulate matter (B) may be added to the slurry and/or the solution in-line or in the vessels (A) or (C). Similarly, additional activators or catalyst compounds may be added in-line. The catalyst component slurry and solution are preferably mixed in-line at some point (E) for a period of time. For example, the solution and slurry may be mixed by utilizing a static mixer or an agitating vessel. The mixing of the catalyst component slurry and the catalyst component solution should be long enough to allow the catalyst compound in the catalyst component solution to disperse in the catalyst component slurry such that the catalyst component, originally in the solution, migrates to the supported activator originally present in the slurry. The combination thereby becomes a uniform dispersion of catalyst compounds on the supported activator forming the catalyst composition of the present disclosure. The length of time that the slurry and the solution are contacted is typically up to about 120 minutes, preferably about 1 to about 60 minutes, more preferably about 5 to about 40 minutes, even more preferably about 10 to about 30 minutes.

In another embodiment, an aluminum alkyl, an ethoxylated aluminum alkyl, an alumoxane, an anti-static agent or a borate activator, such as a C₁ to C₁₅ alkyl aluminum (for example tri-isobutyl aluminum, trimethyl aluminum or the like), a C₁ to C₁₅ ethoxylated alkyl aluminum or methyl alumoxane, ethyl alumoxane, isobutylalumoxane, modified alumoxane or the like are added to the mixture of the slurry and the solution in line. The alkyls, antistatic agents, borate activators and/or alumoxanes may be added (F), directly to the combination of the solution and the slurry, or may be added via an additional alkane (such as isopentane, hexane, heptane, and or octane) carrier stream (G). Preferably, the additional alkyls, antistatic agents, borate activators and/or alumoxanes are present at up to about 500 ppm, more preferably at about 1 to about 300 ppm, more preferably at 10 to about 300 ppm, more preferably at about 10 to about 100 ppm. Preferred carrier streams include isopentane and or hexane. The alkane may be added (G) to the mixture of the slurry and the solution, typically at a rate of about 0.5 to about 60 lbs/hr (27 kg/hr). Likewise carrier gas, such as nitrogen, argon, ethane, propane and the like may be added in-line (H) to the mixture of the slurry and the solution. Typically the carrier gas may be added at the rate of about 1 to about 100 lb/hr (0.4 to 45 kg/hr), preferably about 1 to about 50 lb/hr (5 to 23 kg/hr), more preferably about 1 to about 25 lb/hr (0.4 to 11 kg/hr).

In another embodiment, a liquid carrier stream is introduced into the combination of the solution and slurry that is moving in a downward direction. The mixture of the solution, the slurry and the liquid carrier stream may pass through an optional mixer or length of tube for mixing before being contacted with a gaseous carrier stream.

Similarly, hexene (or other alpha-olefin or diolefin) may be added in-line (J) to the mixture of the slurry and the solution. The slurry/solution mixture is then preferably passed through an injection tube (O) to the reactor (Q). In some embodiments, the injection tube may aerosolize the slurry/solution mixture. In a preferred embodiment the injection tube has a diameter of about 1/16 inch to about 1/2 inch (0.16 cm to 1.27 cm), preferably about 3/16 inch to about 3/8 inch (0.5 cm to 0.9 cm), more preferably 1/4 inch to about 3/8ths inch (0.6 cm to 0.9 cm).

In one embodiment cycle gas (also called re-cycle gas) is introduced into the support tube (S), in another embodiment monomer gas, such as ethylene gas, is introduced into the support tube. Nucleating agents (K), such as fumed silica, can be added directly in to the reactor.

In another embodiment a plenum may be used in the present disclosure. A plenum is a device used to create a particle lean zone in a fluidized bed gas-phase reactor, as described in detail in U.S. Patent No. 5,693,727 which is incorporated herein by reference. A plenum may have one, two, or more injection nozzles.

In another embodiment when a metallocene catalyst or other similar catalyst is used in the gas phase reactor, oxygen and or fluorobenzene can be added to the reactor directly or to the recycle gas to affect the polymerization rate. Thus, when a metallocene catalyst (which is sensitive to oxygen or fluorobenzene) is used in combination with another catalyst (that is not sensitive to oxygen) in a gas phase reactor, oxygen can be used to modify the metallocene polymerization rate relative to the polymerization rate of the other catalyst. An example of such a catalyst combination is bis(n-propyl cyclopentadienyl) zirconium dichloride and [(2,4,6-Me₃C₆H₂)NCH₂CH₂]₂NHZrBz₂, where Me is methyl or bis(indenyl) zirconium dichloride and [(2,4,6-Me₃C₆H₂)NCH₂CH₂]₂NHHfBz₂, where Me is methyl. For example if the oxygen concentration in the nitrogen feed is altered from 0.1 ppm to 0.5 ppm, significantly less polymer from the bisindenyl ZrCl₂ will be produced and the relative amount of polymer produced from the [(2,4,6-Me₃C₆H₂)NCH₂CH₂]₂NHHfBz₂ is increased. WO/09328 discloses the addition of water and or carbon dioxide to gas phase polymerization reactors.

In another embodiment, referring still to Figure 1, the slurry comprising mineral oil, at least one catalyst compound, a support and an activator is mixed in and/or introduced from (A). The catalyst component solution comprising a solvent, such as toluene, hexane, mineral oil or tetrahydrofuran, and a catalyst compound and/or an activator is mixed in and/or introduced from (C). Nucleating agent (B) and (K), such as fumed silica, may be added on line at one or more positions and may be wet or dry. The slurry and the solution are combined and typically mixed at (E). Optional light alkyls (F), such as triisobutyl aluminum, an alumoxane, modified methylalumoxane and/or trimethyl aluminum, may be added in line directly to the combination or via an alkane, such as isopentane, feed (G). Nitrogen (H) and/or olefin, such as hexene, (J) may also be added in line. The combination may then be injected through an injection tube (O) (such as a 1/8 inch (0.3cm) tube) into a gas phase reactor (Q). The injection tube (O) may be supported inside a larger support tube (S), such as a 1 inch (2.54 cm) tube. Oxygen can be added directly to the reactor (Q) or to the recycle gas (P) to alter the activity of one or more catalysts. (R) is flow (monomer, recycle gas, alkane) to the support tube (S).

In another embodiment, catalyst ball formation and or general nozzle fouling were reduced by first feeding isopentane carrier from the feed line (G) into the combination of the solution and the slurry, thereafter the combination of the solution slurry and isopentane preferably moves in a vertical orientation with a downward flow into the reactor using a nitrogen sweep (H) to disperse the isopentane/slurry mixture into the reactor.

The catalyst injection tube passes into the reactor through a compressed chevron packing and extends into the fluid bed a distance of about 0.1 inch to 10 feet (0.25 cm to 3.1 m), preferably about 1 inch to 6 ft (2.5 cm to 1.8 m), and more preferably about 2 inches to 5 feet (5 cm to 1.5 m). Typically, the depth of insertion depends on the diameter of the reactor and typically extends in about 1/20 to 1/2 of the reactor diameter, preferably about 1/10th to 1/2 and more preferably about 1/5th to 1/3rd of the reactor diameter. The end of the tube may be cut perpendicular to the axis to create a nozzle cone or point with an angle ranging from 0 to 90 degrees, preferably ranging from about 10 to 80 degrees. The lip of the hole can be taken to a new knife-edge. The tube can be positioned to reduce resin adhesion or coated with an antifouling or antistatic compound. The tube can also be cut diagonally at an angle simply from about 0 to 80 degrees off the axial line of the tube, preferably about 0 to 60 degrees. The opening of the tube can be the same as the bore of the tube or expanded or diminished to create a nozzle, with sufficient pressure drop and geometry to provide a dispersed spray of a solution slurry and or powder into the reactor, preferably into the fluid bed.

The injection tube can optionally be supported inside a structure within the fluid bed to provide structural integrity. This support tube is typically a heavy walled pipe with an internal diameter of from about 1/4 inch to about 5 inches (0.64 cm to 12.7 cm), preferably about 1/2 inch to about 3 inches (1.3 cm to 7.6 cm), and more preferably about 3/4 inch to about 2 inches (1.9 cm to 5 cm). The support tube preferably extends through the reactor wall to approximately the length of the injection tube, allowing the injection tube to end just inside the end of the support tube or to extend past it up to about 10 inches (25.4 cm). Preferably, the injection tube extends about 0.5 to 5 inches (1.8 cm to 12.7 cm) beyond the end of the support tube and more preferably about 1 to 3 inches (2.5 cm to 7.6 cm). The end of the support tube in the reactor may be cut flat and perpendicular to the axis of the tube or preferably, may be tapered at an angle ranging from about 10 to 80 degrees. The end of the support tube may be polished or coated with an anti-static or anti-fouling material.

A purge flow of fluid (R) (typically fresh monomer, ethylene, hexane, isopentane, recycle gas, and the like) is preferably introduced from outside the reactor down the support tube to aid in dispersion of the catalyst composition allowing the production of resin granular particles of good morphology with decreased agglomeration and an APS (average particle size) in the range of about 0.005 to 0.10 inches (.01 cm to 0.3 cm). The purge flow of fluid helps minimize fouling of the end of the catalyst injection tube and support tubes. The fluid introduced to the support tube may comprise hydrogen; olefins or diolefins, including but not limited to C₂ to C₄₀ alpha olefins and C₂ to C₄₀ diolefins, ethylene, propylene, butene, hexene, octene, norbornene, pentene, hexadiene, pentadiene, isobutylene, octadiene, cyclopentadiene, comonomer being used in the polymerization reaction, hydrogen; alkanes, such C₁ to C₄₀ alkanes, including but not limited to isopentane, hexane, ethane, propane, butane, and the like; mineral oil, cycle gas with or without condensed liquids; or any combination thereof. Preferably the support tube flow is fresh ethylene or propylene that may be heated. In addition, an alkane, such as for instance isopentane or hexane, can be included in the flow at the level ranging from about 0.001 wt %. to about 50% of the flow. The alkane can be dispersed in the flow and may exist as dispersed liquid droplets or be vaporized at the exit of the support tube. The presence of liquid may reduce fouling at the exit.

The flow rate of fluid in the support tube ranges from about 5 to 10,000 pph and is somewhat dependent upon the reactor size. The linear velocity of the fluid in the support tube ranges from about 10 to 500 ft/sec (11 to 549 km/hr), preferably about 20 to 300 ft/sec (22 to 329 km/hr) and more preferably about 30 to 200 ft/sec (33 to 219 km/hr).

Alternatively, the exit of the support tube may be fashioned as a nozzle at the end to form a jet or dispersion of gas to aid in the distribution of the catalyst composition. In one embodiment, the internal diameter of the support tube is reduced gradually by about 3 to 80% at the end, preferably about 5 to 50% in a taper to create a nozzle to accelerate to and or disperse the fluid flow. The insertion of the injection tube is not impacted by the internal taper of the support tube.

In another embodiment of the present disclosure the contact time of the slurry and the solution can be varied to adjust or control formation of the active catalyst complex. The contact time of the slurry and the solution is preferably in the range of from 1 minute to 120 minutes, preferably in the range of from 2 minutes to 60 minutes, preferably 5 minutes to 45 minutes, more preferably from about 10 minutes to about 30 minutes.

In another embodiment, the contact temperature of the slurry and the solution is in the range of from 0°C to about 80°C, preferably from about 0°C to about 60°C, more preferably from about 10°C to about 50°C and most preferably from about 20°C to about 40°C.

In another embodiment, the present disclosure provides introducing the immobilized catalyst system in the presence of a mineral oil or a surface modifier or a combination thereof as described in PCT publication WO 96/11960 and USSN 09/113,261 filed July 10, 1998, which are herein fully incorporated by reference. In another embodiment a slurry or surface modifier, such as an aluminum stearate in mineral oil) is introduced (T) into the reactor with the combination of the slurry and the solution. In another embodiment the surface modifier, such as aluminum stearate, was added into the slurry vessel (A).

In another embodiment the one or all of the catalysts are combined with up to 6 weight % of a metal stearate, (preferably a aluminum stearate, more preferably aluminum distearate) or an anti-static agent based upon the weight of the catalyst, any support and the stearate or anti-static agent, preferably 2 to 3 weight %. In one embodiment, a solution or slurry of the metal stearate or anti-static agent is fed into the reactor. The stearate or anti-static agent may be combined with the slurry (A) or the solution (C) or may be co-fed (R) with the combination of the slurry and the solution. In a preferred embodiment the catalyst compounds and or activators are combined with about 0.5 to about 4 weight % of an antistat, such as a methoxylated amine, such as Witco's Kemamine AS-990 from ICI Specialties in Bloomington Delaware.

In another embodiment the catalyst system or the components thereof are combined with benzil, xylitol, Irganox™ 565, sorbitol or the like and then fed into the reactor. These agents may be combined with the catalyst compounds and/or activators or may be fed into the reactor in a solution with or without the catalyst system or its components. Similarly these agents may be combined with the slurry (A) or the solution (C) or may be co-fed (R) with the combination of the slurry and the solution.

In another embodiment the process of the present disclosure may further comprise additional solutions and slurries. For example, in a preferred embodiment a slurry can be combined with two or more solutions having the same or different catalyst compounds and or activators. Likewise, the solution may be combined with two or more slurries each having the same or different supports, and the same or different catalyst compounds and or activators. Similarly the process of the present disclosure may comprise two or more slurries combined with two or more solutions, preferably in-line, where the slurries each comprise the same or different supports and may comprise the same or different catalyst compounds and or activators and the solutions comprise the same or different catalyst compounds and or activators. For example, the slurry may contain a supported activator and two different catalyst compounds, and two solutions, each containing one of the catalysts in the slurry, are each independently combined, in-line, with the slurry.

### Use of Catalyst Composition to Control Product Properties

The timing, temperature, concentrations, and sequence of the mixing of the solution, the slurry and any optional added materials (nucleating agents, catalyst compounds, activators, etc) described above can be used to alter product properties. The melt index, relative amount of polymer produced by each catalyst, and other properties of the polymer produced may also be changed by manipulating process parameters which include manipulating hydrogen concentration in the polymerization system or by:
1) changing the amount of the first catalyst in the polymerization system, and/or
2) changing the amount of the second catalyst in the polymerization system, and/or
3) changing the hydrogen concentration in the polymerization process; and/or
4) changing the relative ratio of the catalyst in the polymerization process (and optionally adjusting their individual feed rates to maintain a steady or constant resin production rate); and/or
5) changing the amount of liquid and/or gas that is withdrawn and/or purged from the process; and/or
6) changing the amount and/or composition of a recovered liquid and/or recovered gas returned to the polymerization process, said recovered liquid or recovered gas being recovered from polymer discharged from the polymerization process; and/or
7) using a hydrogenation catalyst in the polymerization process; and/or
8) changing the polymerization temperature; and/or
9) changing the ethylene partial pressure in the polymerization process; and/or
10) changing the ethylene to comonomer ratio in the polymerization process; and/or
11) changing the activator to transition metal ratio in the activation sequence; and/or
12) changing the relative feed rates of the slurry and/or solution; and/or
13) changing the mixing time, the temperature and or degree of mixing of the slurry and the solution in-line; and/or
14) adding different types of activator compounds to the polymerization process; and/or
15) adding oxygen or fluorobenzene or other catalyst poison to the polymerization process.

For example to alter the flow index and or melt index of a polymer produced according to the present disclosure using a slurry of supported methylalumoxane and [(2,4,6-Me₃C₆H₂)NCH₂CH₂]₂NH}ZrBz₂ and a solution of bis(n-propyl cyclopentadienyl) zirconium dichloride one can alter the temperature of the reaction in the polymerization reactor, one can alter the concentration of hydrogen in the reactor, or one can alter the concentration of the bis(n-propyl cyclopentadienyl) zirconium dichloride in the solution prior to contacting the solution with the slurry, or one can alter the relative feed rate of the catalyst component solution and/or the catalyst component slurry.

In a preferred embodiment, the flow index (I₂₁-measured according to ASTM D-1238, Condition E, at 190°C) of the polymer product is measured at regular intervals and one of the above factors, preferably temperature, catalyst compound feed rate, the ratio of the two or more catalysts to each other, monomer partial pressure, oxygen concentration, and or hydrogen concentration, is altered to bring the flow index to the desired level, if necessary. Preferably the samples for flow index measurements are melt- homogenized by extruding in an extruder that is equipped with either a single screw, preferably with a mixing head, or a twin screw, to make either tape or strand(s). The tape and or strands are typically cut into small pieces for flow property measurements.

In an embodiment, a polymer product property is measured in-line and in response the ratio of the catalysts being combined is altered. In one embodiment, the molar ratio of the catalyst compound in the catalyst component slurry to the catalyst compound in the catalyst component solution, after the slurry and solution have been mixed to form the final catalyst composition, is 500:1 to 1:500, preferably 100:1 to 1:100, more preferably 50:1 to 1:50 and most preferably 40:1 to 1:10. In another embodiment, the molar ratio of a Group 15 catalyst compound in the slurry to a metallocene catalyst compound in the solution, after the slurry and solution have been mixed to form the catalyst composition, is 500:1, preferably 100:1, more preferably 50:1, more preferably 10:1 and even more preferably 5:1. Preferably, the product property measured is the polymer product's flow index, melt index, density, MWD, comonomer content and combinations thereof. In another embodiment, when the ratio of the catalyst compounds is altered, the introduction rate of the catalyst composition to the reactor, or other process parameters, is altered to maintain a desired production rate.

Likewise, the support architecture, the number of functional groups on the support (such as-OH groups on silica) the activator loading and the preimpregnated catalyst loading can also affect the product formed.

Similarly, altering the ethylene partial pressure can alter product properties. For example in a system where the solution comprised bis(n-propyl cyclopentadienyl) zirconium dichloride and the slurry comprised [(2,4,6-Me₃C₆H₂)NCH₂CH₂]₂NHZrBz₂ and supported methyl alumoxane, increasing the ethylene partial pressure in the gas phase reactor from 220 to 240 psi (1.5-1.7 MPa) increased the Flow Index from 100 to over 700 dg/min.

While not wishing to be bound by or limited to any theory, the inventors believe, that the processes described herein immobilize the solution catalyst compound in and on a support, preferably a supported activator. The in-line immobilization techniques described herein preferably result in a supported catalyst system that when introduced to the reactor provides for better particle morphology, bulk density, and/or higher catalyst activities and without the need for additional equipment in order to introduce catalyst compound solution into a reactor, particularly a gas phase or slurry phase reactor. It is known in the art that typical support techniques for supporting, metallocene catalyst compounds results in lower overall productivity of the formed supported catalysts. In some instances the supporting process in fact renders certain of these catalyst compounds useless in commercial polymerization processes that especially prefer the utilization of supported catalysts. This is particularly true when comparing introducing an unsupported catalyst system into a gas phase process versus a conventional supported catalyst system. By conventional supported catalysts system it is meant those supported catalyst systems that are formed by contacting a support material, an activator and a catalyst compound in various ways under a variety of conditions outside of a catalyst feeder apparatus. Examples of conventional methods of supporting metallocene catalyst systems are described in U.S. Patent Nos. 4,701,432, 4,808,561, 4,912,075, 4,925,821, 4,937,217, 5,008,228, 5,238,892, 5,240,894, 5,332,706, 5,346,925, 5,422,325, 5,466,649, 5,466,766, 5,468,702, 5,529,965, 5,554,704, 5,629,253, 5,639,835, 5,625,015, 5,643,847, 5,665,665, 5,698,487, 5,714,424, 5,723,400, 5,723,402, 5,731,261, 5,759,940, 5,767,032, 5,770,664, 5,846,895 and 5,939,348 and U.S. Application Serial Nos. 271,598 filed July 7, 1994 and 788,736 filed January 23, 1997 and PCT publications WO 95/32995, WO 95/14044, WO 96/06187 and WO 97/02297, and EP-B1-0 685 494. It was also surprisingly discovered that catalyst systems not commercially supportable in a gas phase process in particular were found to be useful when immobilized using the process of the present disclosure.

### Polymerization Process

The catalyst systems prepared and the method of catalyst system addition described above are suitable for use in any prepolymerization and/or polymerization process over a wide range of temperatures and pressures. The temperatures may be in the range of from -60 °C to about 280°C, preferably from 50°C to about 200°C, and the pressures employed may be in the range from 1 atmosphere to about 500 atmospheres or higher.

Polymerization processes include solution, gas phase, slurry phase and a high pressure process or a combination thereof. Particularly preferred is a gas phase or slurry phase polymerization of one or more olefins at least one of which is ethylene or propylene and more preferably ethylene.

In one embodiment, the process of the present disclosure is directed toward a solution, high pressure, slurry or gas phase polymerization process of one or more olefin monomers having from 2 to 30 carbon atoms, preferably 2 to 12 carbon atoms, and more preferably 2 to 8 carbon atoms. The present disclosure is particularly well suited to the polymerization of two or more olefin monomers of ethylene, propylene, butene-1, pentene-1, 4-methyl-pentene-1, hexene,-1, octene-1 and decene-1.

Other monomers useful in the process of the present disclosure include ethylenically unsaturated monomers, diolefins having 4 to 18 carbon atoms, conjugated or nonconjugated dienes, polyenes, vinyl monomers and cyclic olefins. Non-limiting monomers useful in the present disclosure may include norbornene, norbomadiene, isobutylene, isoprene, vinylbenzocyclobutane, styrenes, alkyl substituted styrene, ethylidene norbornene, dicyclopentadiene and cyclopentene.

In the most preferred embodiment of the process of the present disclosure, a copolymer of ethylene is produced, where with ethylene, a comonomer having at least one alpha-olefin having from 3 to 15 carbon atoms, preferably from 4 to 12 carbon atoms, and most preferably from 4 to 8 carbon atoms, is polymerized in a gas phase process.

In another embodiment of the process of the present disclosure, ethylene or propylene is polymerized with at least two different comonomers, optionally one of which may be a diene, to form a terpolymer.

In an embodiment, the mole ratio of comonomer to ethylene, Cₓ/C₂, where Cₓ is the amount of comonomer and C₂ is the amount of ethylene is between about 0.001 to 0.200 and more preferably between about 0.002 to 0.008.

In one embodiment, the present disclosure is directed to a polymerization process, particularly a gas phase or slurry phase process, for polymerizing propylene alone or with one or more other monomers including ethylene, and/or other olefins having from 4 to 12 carbon atoms. Polypropylene polymers may be produced using the particularly bridged metallocene catalysts as described in U.S. Patent Nos. 5,296,434 and 5,278,264, both of which are herein incorporated by reference.

Typically in a gas phase polymerization process a continuous cycle is employed where in one part of the cycle of a reactor system, a cycling gas stream, otherwise known as a recycle stream or fluidizing medium, is heated in the reactor by the heat of polymerization. This heat is removed from the recycle composition in another part of the cycle by a cooling system external to the reactor. Generally, in a gas fluidized bed process for producing polymers, a gaseous stream containing one or more monomers is continuously cycled through a fluidized bed in the presence of a catalyst under reactive conditions. The gaseous stream is withdrawn from the fluidized bed and recycled back into the reactor. Simultaneously, polymer product is withdrawn from the reactor and fresh monomer is added to replace the polymerized monomer. (See for example U.S. Patent Nos. 4,543,399, 4,588,790, 5,028,670, 5,317,036, 5,352,749, 5,405,922, 5,436,304, 5,453,471, 5,462,999, 5,616,661 and 5,668,228, all of which are fully incorporated herein by reference.)

The reactor pressure in a gas phase process may vary from about 100 psig (690 kPa) to about 600 psig (4138 kPa), preferably in the range of from about 200 psig (1379 kPa) to about 400 psig (2759 kPa), more preferably in the range of from about 250 psig (1724 kPa) to about 350 psig (2414 kPa).

The reactor temperature in a gas phase process may vary from about 30°C to about 120°C, preferably from about 60°C to about 115°C, more preferably in the range of from about 70°C to 110°C, and most preferably in the range of from about 70°C to about 95°C.

Other gas phase processes contemplated by the process of the present disclosure include series or multistage polymerization processes. Also gas phase processes contemplated by the present disclosure include those described in U.S. Patent Nos. 5,627,242, 5,665,818 and 5,677,375, and European publications EP-A- 0 794 200 EP-B1-0 649 992, EP-A- 0 802 202 and EP-B- 634 421 all of which are herein fully incorporated by reference.

In a preferred embodiment, the reactor utilized in the present disclosure is capable of and the process of the present disclosure is producing greater than 500 lbs of polymer per hour (227 Kg/hr) to about 200,000 lbs/hr (90,900 Kg/hr) or higher of polymer, preferably greater than 1000 lbs/hr (455 Kg/hr), more preferably greater than 10,000 lbs/hr (4540 Kg/hr), even more preferably greater than 25,000 lbs/hr (11,300 Kg/hr), still more preferably greater than 35,000 lbs/hr (15,900 Kg/hr), still even more preferably greater than 50,000 lbs/hr (22,700 Kg/hr) and most preferably greater than 65,000 lbs/hr (29,000 Kg/hr) to greater than 100,000 lbs/hr (45,500 Kg/hr).

A slurry polymerization process generally uses pressures in the range of from about 1 to about 50 atmospheres and even greater and temperatures in the range of 0°C to about 120°C. In a slurry polymerization, a suspension of solid, particulate polymer is formed in a liquid polymerization diluent medium to which ethylene and comonomers and often hydrogen along with catalyst are added. The suspension including diluent is intermittently or continuously removed from the reactor where the volatile components are separated from the polymer and recycled, optionally after a distillation, to the reactor. The liquid diluent employed in the polymerization medium is typically an alkane having from 3 to 7 carbon atoms, preferably a branched alkane. The medium employed should be liquid under the conditions of polymerization and relatively inert. When a propane medium is used the process must be operated above the reaction diluent critical temperature and pressure. Preferably, a hexane or an isobutane medium is employed.

A preferred polymerization technique of the present disclosure is referred to as a particle form polymerization, or a slurry process where the temperature is kept below the temperature at which the polymer goes into solution. Such technique is well known in the art, and described in for instance U.S. Patent No. 3,248,179, which is fully incorporated herein by reference. Other slurry processes include those employing a loop reactor and those utilizing a plurality of stirred reactors in series, parallel, or combinations thereof. Non-limiting examples of slurry processes include continuous loop or stirred tank processes. Also, other examples of slurry processes are described in U.S. Patent No. 4,613,484 and 5,986,021, which are herein fully incorporated by reference.

In an embodiment the reactor used in the slurry process of the present disclosure is capable of and the process of the present disclosure is producing greater than 2000 lbs of polymer per hour (907 Kg/hr), more preferably greater than 5000 lbs/hr (2268 Kg/hr), and most preferably greater than 10,000 lbs/hr (4540 Kg/hr). In another embodiment the slurry reactor used in the process of the present disclosure is producing greater than 15,000 lbs of polymer per hour (6804 Kg/hr), preferably greater than 25,000 lbs/hr (11,340 Kg/hr) to about 100,000 lbs/hr (45,500 Kg/hr).

Examples of solution processes are described in U.S. Patent Nos. 4,271,060, 5,001,205, 5,236,998, 5,589,555 and 5,977,251 and PCT WO 99/32525 and PCT WO 99/40130, which are fully incorporated herein by reference.

A preferred process of the present disclosure is where the process, preferably a slurry or gas phase process is operated in the presence of a metallocene catalyst system of the present disclosure and in the absence of or essentially free of any scavengers, such as triethylaluminum, trimethylaluminum, tri-isobutylaluminum and tri-n-hexylaluminum and diethyl aluminum chloride, dibutyl zinc and the like. This preferred process is described in PCT publication WO 96/08520 and U.S. Patent No. 5,712,352 and 5,763,543, which are herein fully incorporated by reference.

In one embodiment of the present disclosure, olefin(s), preferably C₂ to C₃₀ olefin(s) or alpha-olefin(s), preferably ethylene or propylene or combinations thereof are prepolymerized in the presence of the metallocene catalyst systems of the present disclosure described above prior to the main polymerization. The prepolymerization can be carried out batchwise or continuously in gas, solution or slurry phase including at elevated pressures. The prepolymerization can take place with any olefin monomer or combination and/or in the presence of any molecular weight controlling agent such as hydrogen. For examples of prepolymerization procedures, see U.S. Patent Nos. 4,748,221, 4,789,359, 4,923,833, 4,921,825, 5,283,278 and 5,705,578 and European publication EP-B-0279 863 and PCT Publication WO 97/44371 all of which are herein fully incorporated by reference.

In one embodiment, toluene is not used in the preparation or polymerization process of the present disclosure.

### Polymer Products

The polymers produced by the process of the present disclosure can be used in a wide variety of products and end-use applications. The polymers produced by the process of the present disclosure include linear low density polyethylene, elastomers, plastomers, high density polyethylenes, medium density polyethylenes, low density polyethylenes, multimodal or bimodal high molecular weight polyethylenes, polypropylene and polypropylene copolymers.

The polymers, typically ethylene based polymers, have a density in the range of from 0.86g/cc to 0.97 g/cc, depending on the desired use. For some applications a density in the range of from 0.88 g/cc to 0.920 g/cc is preferred while in other applications, such as pipe, film and blow molding, a density in the range of from 0.930 g/cc to 0.965 g/cc is preferred. For low density polymers, such as for film applications, a density of 0.910 g/cc to 0.940 g/cc is preferred. Density is measured in accordance with standard ASTM methods.

The polymers produced by the process of the present disclosure may have a molecular weight distribution, a ratio of weight average molecular weight to number average molecular weight (M_{w}/Mₙ), of greater than 1.5 to about 70. In some embodiments the polymer produced has a narrow M_{w}/Mₙ of about 1.5 to 15, while in other embodiments the polymer produced has an M_{w}/Mₙ of about 30 to 50. Also, the polymers of the present disclosure may have a narrow or broad composition distribution as measured by Composition Distribution Breadth Index (CDBI). Further details of determining the CDBI of a copolymer are known to those skilled in the art. See, for example, PCT Patent Application WO 93/03093, published February 18, 1993, which is fully incorporated herein by reference. In some embodiments the polymer produced may have a CDBI of 80% or more or may have a CDBI of 50% or less.

The polymers of the present disclosure in one embodiment have CDBI's generally in the range of greater than 50% to 100%, preferably 99%, preferably in the range of 55% to 85%, and more preferably 60% to 80%, even more preferably greater than 60%, still even more preferably greater than 65%.

In another embodiment, polymers produced using the present disclosure have a CDBI less than 50%, more preferably less than 40%, and most preferably less than 30%.

The polymers of the present disclosure in one embodiment have a melt index (MI) or (I₂) as measured by ASTM-D-1238-E in the range from 0.01 dg/min to 1000 dg/min, more preferably from about 0.01 dg/min to about 100 dg/min, even more preferably from about 0.01 dg/min to about 50 dg/min, and most preferably from about 0.1 dg/min to about 10 dg/min.

The polymers of the present disclosure in an embodiment have a melt index ratio (I₂₁/I₂) (I₂₁ is measured by ASTM-D-1238-F) of from 10 to less than 25, more preferably from about 15 to less than 25.

The polymers of the present disclosure in a preferred embodiment have a melt index ratio (I₂₁/I₂) (I₂₁ is measured by ASTM-D-1238-F) of from preferably greater than 25, more preferably greater than 30, even more preferably greater that 40, still even more preferably greater than 50 and most preferably greater than 65. In an embodiment, the polymer of the present disclosure may have a narrow molecular weight distribution and a broad composition distribution or vice-versa, and may be those polymers described in U.S. Patent No. 5,798,427 incorporated herein by reference.

In one embodiment the polymers produced by the present disclosure have a multimodal molecular weight distribution (Mw/Mn) or, a typically, bimodal molecular weight distribution. In a preferred embodiment, the polymer produced has a density of 0.93 to 0.96 g/cc, an MI (I₂) of 0.03 - 0.10g/10min, an FI (I₂₁) of 4-12 g/ 10min, an MFR (I₂₁/I₂) of 80-180, an overall Mw of 200,000 to 400,000, an overall Mn of 5,000-10,000 and an Mw/Mn of 20-50. Preferably the low molecular weight fraction (∼500 - ∼50,000) has a density of 0.935-0.975 g/cc and the high molecular weight fraction (∼50,000 - ∼ 8,000,000) has a density of 0.910 - 0.950 g/cc. These polymers are particularly useful for film and pipe, especially, for PE-100 pipe applications. More preferably, this embodiment of the polymer has the following molecular weight distribution (MWD) characteristics. The MWDs, as obtained from size exclusion chromatography (SEC), can be deconvoluted using the bimodal fitting program. The preferred split of the polymer, the ratio of Wt% of HMW fraction and the Wt% of LMW fraction, is 20-80 to 80-20, more preferably 30-70 to 70-30, and even more preferably 40-60 to 60-40. Higher Wt% of HMW than LMW Wt% is preferred. The SEC curve can be further analyzed to give percent of Wt% > 1MM, which is the weight percent of the total MWD that has a molecular weight greater than 1 million, and Wt% > 100K, which is the weight perecent of the total MWD that is greater than 100,000 in molecular weight. The weight percent ratio is simply Wt% > 1MM divided by Wt% > 100K. 100,000 was used as an approximate means of dividing the total MWD into a HMW (high molecular weight) and LMW (low molecular weight) region. This ratio gives a simple but sensitive indication of the relative amount of the very high molecular weight species in the HMW region of the MWD. The prefered embodiment of the polymer has the preferred range of weight percent ration (WPR), higher than 10 but less than 30, preferably higher than 15 but less than 25. The stability of blown bubble during film extrusion is found to depend on this WPR as shown in the table below. A preferred catalyst system to produce these polymers according to the present disclosure comprises [(2,4,6-Me₃C₆H₂)NCH₂CH₂]₂NH}HfBz₂ or [(2,4,6-Me₃C₆H₂)NCH₂CH₂]₂NH}ZrBz₂ combined with bis(indenyl)zirconium dichloride, (pentamethylcyclopentadienyl)(n-propylcyclopentadienyl)zirconium dichloride or (tetramethylcyclopentadienyl)(n-propylcyclopentadienyl)zirconium dichloride, and supported methylalumoxane.

| Sample | F1 | MI | MFR | HMW Mw | HMW %Split | Wt %> 1 MM | Wt % > 100K | Wt % Ratio | Bubble Stability |
|---|---|---|---|---|---|---|---|---|---|
| No. 1 | 8.32 | 0.05 1 | 167.3 | 605,500 | 53.5% | 9.7% | 41.8% | 23% | Poor |
| No.2 | 7.45 | 0.06 | 124 | 584,000 | 50.1% | 8.7% | 41.7% | 21% | Good |
| No. 3 | 7.99 | 0.04 7 | 168.7 | 549,900 | 53.3% | 8.7% | 40.9% | 21% | Good |
| No. 4 | 9.16 | 0.07 6 | 121.2 | 454,700 | 58.3% | 7.5% | 42.1% | 18% | Good |
| No.5 | 8.11 | 0.09 4 | 86.7 | 471,800 | 53.7% | 6.6% | 43.3% | 15% | Poor |

From an SEC curve of the embodiment of the polymer , two distinctive peaks of HMW and LMW fractions can be seen with the deconvoluted curves.

| | **LMW** | **HMW** | **Overall** |
|---|---|---|---|
| **Mn:** | 3,231 | 91,514 | 8,076 |
| **Mw:** | 12,307 | 505,322 | 291,217 |
| **Mw/Mn:** | 3.81 | 5.52 | 36.06 |
| **W**t **%:** | 43.57% | 56.43% | |

This multimodal or bimodal polymer is found to exhibit excellent bubble stability and good film extrusion characteristics. The polymer demonstrated excellent draw-down characteristics and as thin as 0.35 mil film was obtained. The film appearance rate was excellent with no speck of gels. The film dart impact strength was excellent suitable which is suitable for grocery sacks applications.

In another embodiment the polymer produced by the present disclosure has a bimodal molecular weight distribution (Mw/Mn). In a preferred embodiment, the polymer produced has a density of 0.93 to 0.97 g/cc, an MI (I₂) of 0.02 - 0.5 g/10min, an FI (I₂₁) of 10-40 g/ 10min, an MFR (I₂/I₂) of 50-300, an Mw of 100,000 to 500,000, an Mn of 8,000-20,000 and an Mw/Mn of 10-40. These polymers are particularly useful for blow molding applications. These bimodal polymers exhibited extraordinary Bent Strip ESCR (environmental stress crack resistance) performance, which far exceeds the performance of unimodal HDPE. Also, the blow molded bottles trimmed easier and had opaque finish, which is preferred over translucent finish of unimodal HDPE.

In yet another embodiment, propylene based polymers are produced in the process of the present disclosure. These polymers include atactic polypropylene, isotactic polypropylene, hemi-isotactic and syndiotactic polypropylene or mixtures thereof produced by using two or more different catalysts in the practice of the present disclosure. Other propylene polymers include propylene block or impact copolymers. Propylene polymers of these types are well known in the art, see for example U.S. Patent Nos. 4,794,096, 3,248,455, 4,376,851, 5,036,034 and 5,459,117, all of which are herein incorporated by reference.

The polymers of the present disclosure may be blended and/or coextruded with any other polymer. Non-limiting examples of other polymers include linear low density polyethylenes produced via conventional Ziegler-Natta and/or metallocene catalysis, elastomers, plastomers, high pressure low density polyethylene, high density polyethylenes, polypropylenes and the like.

Polymers produced by the process of the present disclosure and blends thereof are useful in such forming operations as film, sheet, and fiber extrusion and co-extrusion as well as blow molding, injection molding and rotary molding. Films include blown or cast films formed by coextrusion or by lamination useful as shrink film, cling film, stretch film, sealing films, oriented films, snack packaging, heavy duty bags, grocery sacks, baked and frozen food packaging, medical packaging, industrial liners, membranes, etc. in food-contact and non-food contact applications. Fibers include melt spinning, solution spinning and melt blown fiber operations for use in woven or non-woven form to make filters, diaper fabrics, medical garments, geotextiles, etc. Extruded articles include medical tubing, wire and cable coatings, pipe, geomembranes, and pond liners. Molded articles include single and multi-layered constructions in the form of bottles, tanks, large hollow articles, rigid food containers and toys, etc.

In another embodiment, the polymer of the present disclosure is made into a pipe by methods known in the art. For pipe applications, the polymers of the present disclosure have a I₂₁ of from about 2 to about 10 dg/min and preferably from about 2 to about 8 dg/min. In another embodiment, the pipe of the present disclosure satisfies ISO qualifications. In another embodiment, the present disclosure is used to make polyethylene pipe having a predicted S-4 T_{c} for 110mm pipe of less than -5°C, preferably of less than -15°C and more preferably less than -40°C (ISO DIS 13477/ASTM F1589).

In another embodiment, the polymer has an extrusion rate of greater than about 17 lbs/hour/inch of die circumference and preferably greater than about 20 lbs/hour/inch of die circumference and more preferably greater than about 22 lbs/hour/inch of die circumference.

The polyolefins of the present disclosure can be made into films, molded articles (including pipes), sheets, wire and cable coating and the like. The films may be formed by any of the conventional techniques known in the art including extrusion, co-extrusion, lamination, blowing and casting. The film may be obtained by the flat film or tubular process which may be followed by orientation in a uniaxial direction or in two mutually perpendicular directions in the plane of the film to the same or different extents. Orientation may be to the same extent in both directions or may be to different extents. Particularly preferred methods to form the polymers into films include extrusion or coextrusion on a blown or cast film line.

In another embodiment, the polymer of the present disclosure is made into a film by methods known in the art. For film application, the polymers of the present disclosure have a I₂₁ of from about 2 to about 50 dg/min, preferably from about 2 to about 30 dg/min, even more preferably from about 2 to about 20 dg/min, still more preferably about 5 to about 15 dg/min and yet more preferably from about 5 to about 10 dg/min.

The objects produced (such as films, pipes, etc) may further contain additives such as slip, antiblock, antioxidants, pigments, fillers, antifog, UV stabilizers, antistats, polymer processing aids, neutralizers, lubricants, surfactants, pigments, dyes and nucleating agents. Preferred additives include silicon dioxide, synthetic silica, titanium dioxide, polydimethylsiloxane, calcium carbonate, metal stearates, calcium stearate, zinc stearate, talc, BaSO₄, diatomaceous earth, wax, carbon black, flame retarding additives, low molecular weight resins, hydrocarbon resins, glass beads and the like. The additives may be present in the typically effective amounts well known in the art, such as 0.001 weight % to 10 weight %.

In another embodiment, the polymer of the present disclosure is made into a molded article by methods known in the art, for example, by blow molding and injection-stretch molding. For molded applications, the polymers of the present disclosure have a I₂₁ of from about 20 dg/min to about 50 dg/min and preferably from about 35 dg/min to about 45 dg/min.

Further, while not wishing to be bound by any theory, it is believed that the polymers produced by the present disclosure have the unique advantage of the two polymer products being so intimately blended that there is an even distribution of the two polymers across the polymer particles as they exit the reactor. The unprocessed, untreated granular polymer is referred to as neat polymer. The neat polymer is then separated into fractions by standard sieve sizes according to ASTM D 1921 particle size (sieve analysis) of Plastic Materials, Method A or PEG Method 507.

| Sieve size | Fraction Collected | Fraction Name |
|---|---|---|
| 10 mesh | > 2000 µm | Fraction 1 |
| 18 mesh | 2000- 1000 µm | Fraction 2 |
| 35 mesh | <1000 - 500 µm | Fraction 3 |
| 60 mesh | <500-250 µm | Fraction 4 |
| 120 mesh | <250 -125 µm | Fraction 5 |
| 200mesh/Pan | <125 µm | Fraction 6 |
| Overall | | Fraction 6 |

The individual fractions (Fraction 2, 3, 4, 5) are then tested for physical properties. Melt index is measured according to ASTM 1238, condition E, 190°C.

A unique attribute of the polymer produced herein is that the melt indices of the different fractions do not vary significantly. In a preferred embodiment the melt indices of Fractions 3, 4 and 5 do not vary by more than 40% relative, preferably by not more than 30% relative, preferably by not more than 10% relative, preferably by not more than 8% relative, preferably by not more that 6% relative, preferably by not more than 4% relative. Relative means relative to the mean of the values for Fractions 3, 4 and 5.

In another embodiment, fractions 2, 3, 4 and 5 comprise more than 90% of the total weight of the resin sample, preferably fractions 2, 3 and 4 comprise more than 90% of the total weight of the resin sample.

Another desirable attribute of the polymer produced herein is that the Mw/Mn of the different fractions do not vary significantly. In a preferred embodiment the Mw/Mn of Fractions 1, 4, 5 and 6 do not vary by more than 20% relative, preferably by not more than 10% relative, preferably by not more than 8% relative, preferably by not more than 6% relative, preferably by not more that 4% relative, preferably by not more than 2% relative. In a preferred embodiment the Mw/Mn of Fractions 1, 4 and 6 do not vary by more than 20% relative, preferably by not more than 10% relative, preferably by not more than 8% relative, preferably by not more than 6% relative, preferably by not more that 4% relative, preferably by not more than 2% relative. Relative means relative to the mean of the values for Fractions 1, 4 and 6. In another preferred embodiment the Mw/Mn of Fractions 2, 3, 4 and 5 do not vary by more than 20% relative, preferably by not more than 10% relative, preferably by not more than 8% relative, preferably by not more than 6% relative, preferably by not more that 4% relative, preferably by not more than 2% relative. Relative means relative to the mean of the values for Fractions 2, 3, 4 and 5. In another preferred embodiment the Mw/Mn of Fractions 3, 4 and 5 do not vary by more than 20% relative, preferably by not more than 10% relative, preferably by not more than 8% relative, preferably by not more than 6% relative, preferably by not more that 4% relative, preferably by not more than 2% relative. Relative means relative to the mean of the values for Fractions 3, 4 and 5. Mn and Mw are measured by gel permeation chromatography on a waters 150 °C GPC instrument equipped with differential refraction index detectors. The GPC columns are calibrated by running a series of narrow polystyrene standards and the molecular weights are calculated using broad polyethylene standards National Bureau of Standards 1496 for the polymer in question.

In another preferred embodiment the polymer produced according to the present disclosure comprises 10-90 weight% of low molecular weight polymer (low is 50,000 or less preferably 40,000 or less), preferably 20 to 80 weight%, more preferably 40-60 weight%, based upon the weight of the polymer.

In one embodiment the fractions have the following characteristics.

| Sieve size | Fraction Collected | Weight % | I21 | 15 | I2 | Fraction Name |
|---|---|---|---|---|---|---|
| 10 mesh | > 2000 µm | 0.5 | | | | Fraction 1 |
| 18 mesh | 2000- 1000 µm | 1.02 | 23.9 | 0.75 | 0.14 | Fraction 2 |
| 35 mesh | < 1000-500 µm | 15.11 | 37.6 | 1.18 | 0.22 | Fraction 3 |
| 60 mesh | <500-250 µm | 44.05 | 41.0 | 1.28 | 0.20 | Fraction 4 |
| 120 mesh | <250 -125 µm | 33.62 | 40.8 | .93 | 0.18 | Fraction 5 |
| 200mesh/Pan | <125 µm | 5.70 | | | | Fraction 6 |
| Overall | | 100.0 | 41.6 | 1.18 | 0.23 | Fraction 6 |

In another embodiment the polyolefin produced is found to have at least two species of molecular weights present at greater than 20 weight% based upon the weight of the polymer.

In another embodiment of the present disclosure the polymer produced is bi- or multi-modal (on the SEC graph). By bi- or multi-modal is meant that the SEC graph of the polymer has two or more positive slopes, two or more negative slopes, and three or more inflection points (an inflection point is that point where the second derivative of the curve becomes negative) OR the graph has at least has one positive slope, one negative slope, one inflection point and a change in the positive and or negative slope greater than 20% of the slope before the change. In another embodiment the SEC graph has one positive slope, one negative slope, one inflection point and an Mw/Mn of 10 or more, preferably 15 or more, more preferably 20 or more. The SEC graph is generated by gel permeation chromatography on a waters 150 °C GPC instrument equipped with differential refraction index detectors. The columns are calibrated by running a series of narrow polystyrene standards and the molecular weights were calculated using Mark Houwink coefficients for the polymer in question.

The films produced using the polymers of the present disclosure have extremely good appearance properties. The films have a low gel content and/or have good haze and gloss. In a preferred embodiment the 1 mil film (1.0 mil =0.25µm) has a 45° gloss of 7 or more, preferably 8 or more as measured by ASTM D 2475. In a preferred embodiment the 1 mil film (1.0 mil = 25µm) has a haze of 75 of less, preferably 70 or less as measured by ASTM D 1003, condition A.

### EXAMPLES

Polymerization data (shown in Table 1 below) from a laboratory stirred gas phase reactor shows that productivity is at least about the same, within the accuracy of the measurement for catalyst made with recycled toluene as catalyst made with "fresh" (i.e., not previously used in catalyst preparation) toluene. Productivity is tested on the second recycle cycle. Catalyst A and B are Bis(phenylmethyl)[N'-2,3,4,5,6-pentamethylphenyl)-N-[2-[2,3,4,5,6-pentamethylphenyl)amino-kN]ethyl]-1,2-ethane diaminato(2-)kN,kN']zirconium and n-propylcyclopentadienyl) (tetramethylcyclopentadieny)zirconiumdichloride mixed with 10% methylaluminoxane and a CABOSIL™ fumed silica support.

**Table 1**

| Sample | Catalyst | Feedstock | Productivity g/g | % Of Control |
|---|---|---|---|---|
| 1 | A | Used fresh toluene | 5900 | - |
| 2 | A | Used recycle toluene | 6100 | 103 |
| 3 | B | Used fresh toluene | 7630 | - |
| 4 | B | Used recycle toluene | 6670 | 87 |

## Claims

1. A process to prepare a catalyst composition, comprising:
combining catalyst precursors in a recycled organic reaction solvent;
allowing the catalyst precursors to react to form a catalyst compound; and
separating the formed catalyst compound from the reaction solvent, wherein the separating comprises vaporizing the reaction solvent from the formed catalyst compound, and wherein the vaporizing comprises contacting a mist of the formed catalyst compound and the reaction solvent with hot nitrogen.

2. A process to reuse a solvent in the preparation of a catalyst composition, comprising:
vaporizing an organic reaction solvent from a catalyst compound formed from catalyst precursors combined in the reaction solvent, wherein the vaporizing comprises contacting a mist of the formed catalyst compound and the reaction solvent with hot nitrogen;
collecting and condensing the vaporized reaction solvent; and
recycling the reaction solvent to combine with additional catalyst precursors for formation of additional catalyst compound.

3. The process of claim 1, further comprising:
collecting and condensing the vaporized reaction solvent.

4. The process of claim 3, further comprising:
recycling the condensed reaction solvent to combine with additional catalyst precursors for formation of additional catalyst compound.

5. The process of any one of the preceding claims, wherein the organic reaction solvent comprises a non-coordinating or weakly coordinating solvent.

6. The process of any one of the preceding claims, wherein the organic reaction solvent comprises at least one of ether, toluene, xylene, benzene, methylene chloride, and hexane.

7. The process of any one of the preceding claims, wherein the catalyst precursors comprise a Group 15 atom containing ligand compound and a metal containing compound.

8. The process of any one of the preceding claims, wherein the catalyst precursors further comprise an alkylating agent.

9. The process of claim 8, wherein the formed catalyst compound comprises a compound represented by: 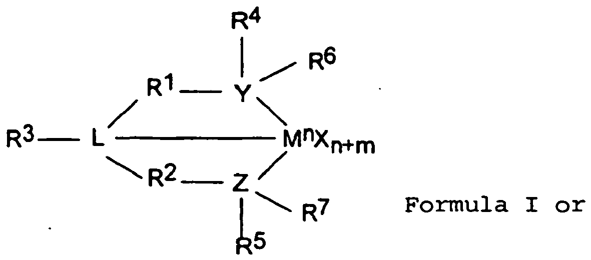 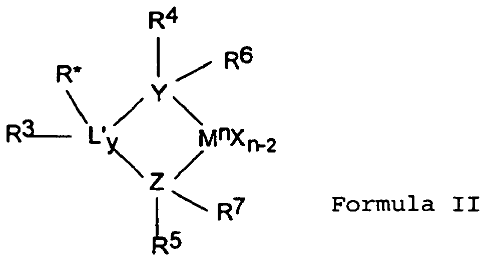 wherein
M is a Group 3 to 12 transition metal or a Group 13 or 14 main group metal;
each X is independently an anionic leaving group;
y is 0 or 1;
n is the oxidation state of M;
m is the formal charge of the ligand represented by YZL
or YZL';
L is a Group 15 or 16 element;
L' is a Group 15 or 16 element or Group 14 containing group;
Y is a Group 15 element;
Z is a Group 15 element;
R¹ and R² are independently a C₁ to C₂₀ hydrocarbon group, a heteroatom containing group having up to twenty carbon atoms, silicon, germanium, tin, lead, or phosphorus;
R¹ and R² may also be interconnected to each other;
R³ is absent, a hydrocarbon group, hydrogen, a halogen, or a heteroatom containing group;
R⁴ and R⁵ are independently an alkyl group, an aryl group, a substituted aryl group, a cyclic alkyl group, a substituted cyclic alkyl group, a cyclic aralkyl group, a substituted cyclic aralkyl group or a multiple ring system;
R⁴ and R⁵ may be interconnected to each other;
R⁶ and R⁷ are independently absent, hydrogen, an alkyl group, halogen, heteroatom, or a hydrocarbyl group; and R* is absent, hydrogen, a Group 14 atom containing group, a halogen, or a heteroatom containing group.

10. The process of any one of the preceding claims, further comprising:
combining at least one activator with the catalyst precursors.

11. The process of any one of the preceding claims, further comprising:
combining the formed catalyst compound with at least one of a diluent, an activator, a support material, an additional catalyst compound to form a catalyst composition.

12. The process of claim 11, wherein the additional catalyst compound comprises a metallocene catalyst compound.

13. The process of claim 12, wherein the metallocene catalyst compound is selected from bis(n-propylcyclopentadienyl)-MX2, (pentamethylcyclopentadienyl)(n-propylcyclopentadienyl)MX2, bis(indenyl)-MX2, and (tetramethylcyclopentadienyl)(n-propylcyclopentadienyl)MX2, wherein M is a Group 4 metal, and X is an anionic leaving group.

14. The process of any one of the preceding claims, further comprising:
introducing the catalyst composition and one or more olefin(s) into an operating polymerization reactor.

## Patentansprüche

1. Verfahren zur Bereitung einer Katalysatorzusammensetzung, wobei das Verfahren die folgenden Schritte aufweist:
Kombination von Katalysator-Vorläufern in einem recycelten organischen Reaktionslösungsmittel;
Zulassen, dass die Katalysator-Vorläufer zur Bildung einer Katalysatorverbindung reagieren; und
Trennung der gebildeten Katalysatorverbindung von dem Reaktionslösungsmittel, **dadurch gekennzeichnet, dass** die Trennung die Verdampfung des Reaktionslösungsmittels aus der gebildeten Katalysatorverbindung aufweist, und dass die Verdampfung das Kontaktieren eines Dunstes bzw. eines feinen Nebels der gebildeten Katalysatorverbindung und des Reaktionslösungsmittels mit heißem Stickstoff aufweist.

2. Verfahren zur Wiederverwendung eines Lösungsmittels bei der Bereitung einer Katalysatorzusammensetzung, wobei das Verfahren die folgenden Schritte aufweist:
Verdampfen eines organischen Reaktionslösungsmittels aus einer Katalysatorverbindung, welche aus in dem Reaktionslösungsmittel kombinierten Katalysator-Vorläufern gebildet ist, **dadurch gekennzeichnet, dass** die Verdampfung das Kontaktieren eines Dunstes bzw. feinen Nebels der gebildeten Katalysatorverbindung und des Reaktionslösungsmittels mit heißem Stickstoff aufweist;
Sammeln bzw. Auffangen und Kondensieren des vedampften Reaktionslösungsmittels; und
Recyceln des Reaktionslösungsmittels zur Kombination mit zusätzlichen Katalysator-Vorläufern zur Bildung einer zusätzlichen Katalysatorverbindung.

3. Verfahren nach Anspruch 1, welches des Weiteren den folgenden Schritt aufweist:
Sammeln bzw. Auffangen und Kondensieren des verdampften Reaktionslösungsmittels.

4. Verfahren nach Anspruch 3, welches des Weiteren den folgenden Schritt aufweist:
Recyceln des kondensierten Reaktionslösungsmittels zur Kombination mit zusätzlichen Katalysator-Vorläufern zur Bildung einer zusätzlichen Katalysatorverbindung.

5. Verfahren nach einem der vorhergehenden Ansprüche, **dadurch gekennzeichnet, dass** das organische Reaktionslösungsmittel ein nicht koordinierendes oder schwach koordinierendes Lösungsmittel aufweist.

6. Verfahren nach einem der vorhergehenden Ansprüche, **dadurch gekennzeichnet, dass** das organische Reaktionslösungsmittel zumindest entweder Ether, Toluen, Xylen, Benzen, Methylenchlorid oder Hexan aufweist.

7. Verfahren nach einem der vorhergehenden Ansprüche, **dadurch gekennzeichnet, dass** die Katalysator-Vorläufer eine Ligandverbindung mit einem Atom der Gruppe 15 und eine metallhaltige Verbindung aufweisen.

8. Verfahren nach einem der vorhergehenden Ansprüche, **dadurch gekennzeichnet, dass** die Katalysator-Vorläufer des Weiteren ein Alkylierungsmittel aufweisen.

9. Verfahren nach Anspruch 8, **dadurch gekennzeichnet, dass** die gebildete Katalysatorverbindung eine Verbindung aufweist, welche folgendermaßen dargestellt wird: 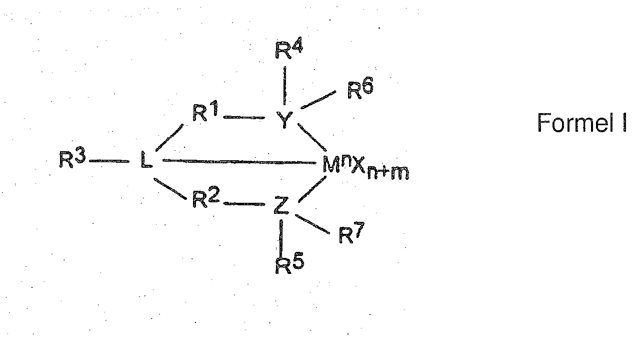 oder 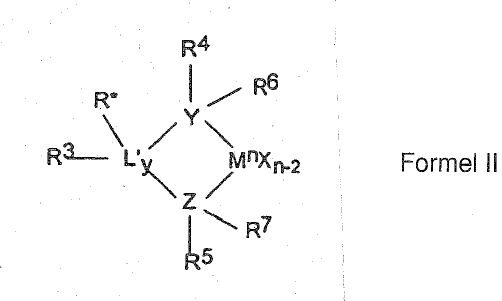 wobei:
M ein übergangsmetall der Gruppe 3 bis 12 oder ein Hauptgruppenmetall der Gruppe 13 oder 14 ist;
jedes X unabhängig voneinander eine anionische Restgruppe ist;
y 0 oder 1 ist;
n der Oxidationszustand von M ist;
m die formale Ladung des durch YZL oder YZL' dargestellten Liganden ist;
L ein Element der Gruppe 15 oder 16 ist; L' ein Element der Gruppe 15 oder 16 ist oder eine die Gruppe 14 enthaltende Gruppe;
Y ein Element der Gruppe 15 ist;
Z ein Element der Gruppe 15 ist;
R¹ und R² unabhängig voneinander eine C₁ bis C₂₀ Wasserstoffgruppe, eine heteroatomhaltige Gruppe mit bis zu zwanzig Kohlenstoffatomen, Silizium, Germanium, Zinn, Blei oder Phosphor sind;
R¹ und R² auch miteinander verbunden sein können;
R³ nicht vorhanden, eine Wasserstoffgruppe, Wasserstoff, ein Halogen oder eine heteroatomhaltige Gruppe ist;
R⁴ und R⁵ unabhängig voneinander eine Alkylgruppe, eine Arylgruppe, eine substituierte Arylgruppe, eine cyclische Alkylgruppe, eine substituierte cyclische Alkylgruppe, eine cyclische Aralkylgruppe, eine substituierte cyclische Aralkylgruppe oder ein Mehrringsystem sind;
R⁴ und R⁵ miteinander verbunden sein können;
R⁶ und R⁷ unabhängig voneinander nicht vorhanden, Wasserstoff, eine Alkylgruppe, ein Halogen, ein Heteroatom oder eine Hydrocarbylgruppe sind; und R* nicht vorhanden, Wasserstoff, eine ein Atom der Gruppe 14 enthaltende Gruppe, ein Halogen oder eine heteroatomhaltige Gruppe sind.

10. Verfahren nach einem der vorhergehenden Ansprüche, welches des Weiteren den folgenden Schritt aufweist:
Kombinieren mindestens eines Aktivators mit den Katalysator-Vorläufern.

11. Verfahren nach einem der vorhergehenden Ansprüche, welches des Weiteren den folgenden Schritt aufweist:
Kombinieren der gebildeten Katalysatorverbindung mit zumindest entweder einem Verdünnungsmittel bzw. Weichmacher, einem Aktivator, einem Trägermaterial, oder einer zusätzlichen Katalysatorverbindung zur Bildung einer Katalysatorzusammensetzung.

12. Verfahren nach Anspruch 11, **dadurch gekennzeichnet, dass** die zusätzliche Katalysatorverbindung eine Metallocen-Katalysatorverbindung aufweist.

13. Verfahren nach Anspruch 12, **dadurch gekennzeichnet, dass** die Metallocen-Katalysatorverbindung ausgewählt wird aus:
Bis(n-Propylcyclopentadienyl)-MX₂,
(Pentamethylcyclopentadienyl) (n-Propylcyclopentadienyl)MX2, Bis(Indenyl)-MX₂, und
(Tetramethylcyclopentadienyl) (n-Propylcyclopentadienyl)MX₂, wobei M ein Metall der Gruppe 4 ist und X eine anionische Restgruppe ist.

14. Verfahren nach einem der vorhergehenden Ansprüche, welches des Weiteren den folgenden Schritt aufweist:
Einbringung der Katalysatorzusammensetzung und ein oder mehrere Olefin(e) in einen in Betrieb befindlichen Polymerisationsreaktor.

## Revendications

1. Procédé pour la préparation d'une composition de catalyseur, comprenant les étapes consistant :
à combiner des précurseurs de catalyseur dans un solvant réactionnel organique recyclé ;
à laisser les précurseurs de catalyseur réagir pour former un composé catalytique ; et
à séparer le composé catalytique formé du solvant réactionnel, dans lequel la séparation comprend la vaporisation du solvant réactionnel du composé catalytique formé, et dans lequel la vaporisation comprend la mise en contact d'un brouillard du composé catalytique formé et du solvant réactionnel avec de l'azote chaud.

2. Procédé de réutilisation d'un solvant dans la préparation d'une composition de catalyseur, comprenant les étapes consistant :
à vaporiser un solvant réactionnel organique d'un composé catalytique formé à partir de précurseurs de catalyseur combinés dans le solvant réactionnel, la vaporisation comprenant la mise en contact d'un brouillard du composé catalytique formé et du solvant réactionnel avec de l'azote chaud ;
à recueillir et condenser le solvant réactionnel vaporisé ; et
à recycler le solvant réactionnel pour la combinaison avec une quantité supplémentaire de précurseurs de catalyseur pour la formation d'une quantité supplémentaire de composé catalytique.

3. Procédé suivant la revendication 1, comprenant en outre l'étape consistant :
à recueillir et condenser le solvant réactionnel vaporisé.

4. Procédé suivant la revendication 3, comprenant en outre l'étape consistant :
à recycler le solvant réactionnel condensé pour la combinaison avec une quantité supplémentaire de précurseurs de catalyseur pour la formation d'une quantité supplémentaire de composé catalytique.

5. Procédé suivant l'une quelconque des revendications précédentes, dans lequel le solvant réactionnel organique comprend un solvant non-coordinant ou faiblement coordinant.

6. Procédé suivant l'une quelconque des revendications précédentes, dans lequel le solvant réactionnel organique comprend au moins un des solvants consistant en l'éther, le toluène, le xylène, le benzène, le chlorure de méthylène et l'hexane.

7. Procédé suivant l'une quelconque des revendications précédentes, dans lequel les précurseurs de catalyseur comprennent un composé servant de ligand contenant un atome du groupe 15 et un composé contenant un métal.

8. Procédé suivant l'une quelconque des revendications précédentes, dans lequel les précurseurs de catalyseur comprennent en outre un agent alkylant.

9. Procédé suivant la revendication 8, dans lequel le composé catalytique formé comprend un composé représenté par : 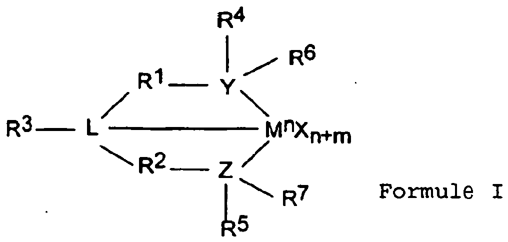 ou 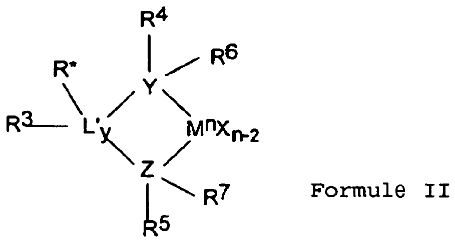 dans laquelle
M représente un métal de transition des Groupes 3 à 12 ou un métal de groupe principal du Groupe 13 ou 14 ;
chaque X représente indépendamment un groupe partant anionique ;
y est égal à 0 ou 1 ;
n représente l'état d'oxydation de M ;
m représente la charge formelle du ligand représenté par YZL ou YZL' ;
L représente un élément du Groupe 15 ou 16 ; L' représente un élément du Groupe 15 ou 16 ou un groupe contenant un élément du Groupe 14 ;
Y représente un élément du Groupe 15 ;
Z représente un élément du Groupe 15 ;
R¹ et R² représentent indépendamment un groupe hydrocarboné en C₁ à C₂₀, un groupe contenant un hétéroatome ayant jusqu'à vingt atomes de carbone, du silicium, du germanium, de l'étain, du plomb ou du phosphore ;
R¹ et R² peuvent également être interconnectés l'un avec l'autre ;
R³ est absent ou représente un groupe hydrocarboné, un atome d'hydrogène, un atome d'halogène ou un groupe contenant un hétéroatome ;
R⁴ et R⁵ représentent indépendamment un groupe alkyle, un groupe aryle, un groupe aryle substitué, un groupe alkyle cyclique, un groupe alkyle cyclique substitué, un groupe aralkyle cyclique, un groupe aralkyle cyclique substitué ou un système à noyaux multiples ;
R⁴ et R⁵ peuvent être interconnectés l'un avec l'autre ;
R⁶ et R⁷, indépendamment, sont absents ou représentent un atome d'hydrogène, un groupe alkyle, un atome d'halogène, un hétéroatome ou un groupe hydrocarbyle ; et R* est absent ou représente un atome d'hydrogène, un groupe contenant un atome du Groupe 14, un atome d'halogène ou un groupe contenant un hétéroatome.

10. Procédé suivant l'une quelconque des revendications précédentes, comprenant en outre l'étape consistant :
à combiner au moins un activateur avec les précurseurs de catalyseur.

11. Procédé suivant l'une quelconque des revendications précédentes, comprenant en outre l'étape consistant :
à combiner le composé catalytique formé avec au moins un des agents consistant en un diluant, un activateur, une matière de support et un composé catalytique supplémentaire pour former une composition de catalyseur.

12. Procédé suivant la revendication 11, dans lequel le composé catalytique supplémentaire comprend un composé catalytique du type métallocène.

13. Procédé suivant la revendication 12, dans lequel le composé catalytique du type métallocène est choisi entre
bis(n-propyllcyclopentadiényl)-MX₂, (pentaméthylcyclopentadiényl)(n-propylcyclopenta-diényl)MX₂,
bis(indényl)-MX2, et (tétraméthylcyclopentadiényl)(n-propylcyclopentadiényl)MX₂,
dans lesquels M représente un métal du Groupe 4 et X représente un groupe partant anionique.

14. Procédé suivant l'une quelconque des revendications précédentes, comprenant en outre l'étape consistant :
à introduire la composition catalytique et une ou plusieurs oléfines dans un réacteur de polymérisation dans des conditions opératoires.
